# EUROPEAN PATENT APPLICATION

(11) **EP 4 383 114 A1**
(43) Date of publication of application: **12.06.2024**
(21) Application number: 23215328.8
(22) Date of filing: 08.12.2023
(51) Int. Cl.: G06F 21/64, H04L 9/00, H04L 9/32

(54) **GOVERNANCE IMPLEMENTATION IN AN N-DIMENSIONAL BLOCKCHAIN**

(30) Priority: 08.12.2022 US 202263386592 P
(71) Applicant: Providentia Worldwide, LLC, Fredericksburg VA 22407 (US)
(72) Inventor: QUICK, S. Ryan, Fredericksburg, 22407 (US); KOLSTER, Armand, San Francisco, 94107 (US)
(74) Representative: Mewburn Ellis LLP

(57) **Abstract**

This disclosure also describes systems and methods for implementing immutable governance within a technology platform having an N-dimensional blockchain structure and graph technologies. The technology platform creates a blockchain with immutable governance to cover each unique entity, behavior, and relationship. This approach to governance allows the platform to provide robust and resilient performance at extreme scales while providing interoperability between all blockchains and off-chain structures.

## Description

### BACKGROUND

Modern applications leverage blockchains to provide supply chain management, banking and finance tools, healthcare systems, cryptocurrency and token systems, voting systems, and many other types of applications. Blockchain applications generally apply similar principles of operation, in which the underlying blockchain technology functions as the core system of record for both data in situ (data at rest) and data in motus (data in flight). This makes for an efficient and easily-traced mechanism for data operations. However, due to the single-threaded nature of blockchains, this architecture often results in back pressure, performance degradation, difficulty searching, and other operational challenges. This is especially true as an underlying blockchain grows in scale.

Blockchain applications may employ smart contracts. A smart contract is a self-executing computer program that allows parties to transact. A smart contract programmatically executes terms of a contract agreed to by the parties.

### BRIEF DESCRIPTION OF THE DRAWINGS/FIGURES

FIG. 1 illustrates an example N-dimensional blockchain structure, according to some embodiments.
FIG. 2 illustrates a linked structure having a first blockchain linked to a second blockchain, according to some embodiments.
FIG. 3 illustrates another linked structure depicting entities, behaviors, and relationships written to blocks of an N-dimensional blockchain structure, according to some embodiments.
FIG. 4 is a diagram illustrating a graph representation of entities, behaviors, and locations in the N-dimensional blockchain structure, according to some embodiments.
FIG. 5 is a diagram illustrating a graph representation of entities, behaviors, and locations in the N-dimensional blockchain structure, according to some embodiments.
FIG. 6 is a diagram illustrating a graph representation of entities, behaviors, and locations in the N-dimensional blockchain structure, according to some embodiments.
FIG. 7 is a diagram illustrating an exemplary N-dimensional blockchain structure and a corresponding graph.
FIG. 8 is a diagram illustrating an architecture that uses an N-dimensional blockchain structure and a corresponding graph to provide external interfaces that serve a variety of use cases.
FIG. 9 is a diagram illustrating a relationship involving an asset-based exchange.
FIG. 10 is a diagram illustrating a use case involving a non-fungible token.
FIG. 11 is a diagram illustrating coordination among troves in a use case involving an asset-based exchange.
FIG. 12 is a diagram illustrating coordinated disbursement in an asset based exchange.
FIG. 13 is a diagram illustrating a bridging architecture.
FIG. 14 is a diagram illustrating an architecture for supporting transactions using an event message bus.
FIG. 15A is a diagram illustrating standard chain persistence.
FIG. 15B is a diagram illustrating mirrored chain persistence.
FIG. 16A is a diagram illustrating a two-pylon approach to bridging.
FIG. 16B is a diagram illustrating a three-pylon approach to bridging.
FIG. 17 is a diagram illustrating a key-value store having a client, a gateway, and three nodes.
FIGS. 18A and 18B are diagrams illustrating a modified key-value store/consensus algorithm protocol that leverages a synchronous network transport protocol.
FIG. 19 illustrates code modifications made to allow a key-value store/consensus algorithm protocol to harness a barrier-synced network's capabilities.
FIG. 20 is a diagram illustrating a test harness that assures the enhanced key-value store/consensus algorithm protocol.
FIG. 21 is an example computer system useful for implementing various embodiments.

### DETAILED DESCRIPTION

Provided herein are system, apparatus, device, method and/or computer program product embodiments, and/or combinations and sub-combinations thereof, for implementing governance, which may be immutable, in an N-dimensional blockchain structure. This approach to governance provides: (1) robust and resilient performance at extreme scales, (2) interoperability between disparate blockchains and off-chain structures, and (3) security from post-hoc modification of chain governance that may damage provenance and erode trust.

Generally speaking, governance is a set of rules guiding behavior. In the context of blockchain applications, governance may serve as an abstraction layer between where and how information is written. For example, one common approach to governance uses the relative value of a transaction to provide the means by which to validate and confirm transactions. Governance may dictate core functions of a blockchain such as allocation, block size, rewards, voting rights, etc.

In traditional decentralized and permissioned systems, a collection of entities is responsible for determining the locus and content of blocks at runtime. These entities control the management of the content, value, operational structure, and behavior of the storage engine. In permissioned systems, an administrative mechanism alters the content, value, operational structure, and behavior. In decentralized systems, a collection of entities, voters, stakeholders, cabal, or other clique controls block or transaction behavior-sometimes moment by moment (or block by block).

However, legacy blockchain applications are deficient with respect to governance. Governance code may be subject to retroactive, post-hoc modification. A trusted party/entity (*e.g*., a core development team, a fiduciary, automated processes, an AI construct, etc.) may change governance code in accordance with governance processes. The trusted entity may mismanage, act negligently, commit malfeasance, or otherwise violate trust. Such a violation of trust is possible because the governance is modifiable. This malleability undermines a foundational goal of a blockchain application, which is to provide a trusted, permanent, and immutable ledger.

Accordingly, a need exists to implement immutable governance within an N-dimensional blockchain structure. An important aspect of disclosed embodiments is the insistence on immutable governance-*i.e*., in these embodiments, all blockchains are set in behavior. Each transactional relationship may be created as a static governance rule. This governance information specifies what may be added to a block, the mechanisms by which data are constructed, stored, and surfaced, and the means by which to manage the blockchain or storage resource.

The disclosed technique may create permanent and immutable governance by writing into the first blockchain each entity, behavior (composed of one or more tasks to complete a transaction), and relationship (composed of at least one entity and at least one behavior) that transact using the first blockchain. The technique may create a second blockchain linked to the first blockchain that records transactions conducted under that relationship in accordance with the recorded, immutable behavior. Each second blockchain represents behaviors conducted in relationships between entities. Second blockchains may simultaneously and doubly serve as first blockchains by also recording header blocks, information about entities, behaviors, and relationships, and blockchain links to other blockchains.

In this fashion, a collection of blockchains in an N-dimensional blockchain structure may form the persistence tier for the disclosed platform. Each blockchain captures the transactions for a specific entity-behavior relationship. The entity(ies), behavior, and chain may form the relationship. Any particular transaction may route to a single chain or mirrored chain(s). This maintains the key principle of blockchain operations: that any transaction be accountable in space and time in an immutable, irrefutable, tamper-proof and future-proof manner. At the same time, the platform may support enormous amounts of transactions between any number of actors in parallel precisely because each atomic transaction need only append to a single chain. One thousand or even one million parallel transactions may be conducted substantially simultaneously without needing to parallelize any single chain, cause a single chain to become a choke-point, or depend on the outcome or validation of any other transaction. The N-dimensional blockchain may scale as needed to include many such first and second blockchains. Chains function independently from each other and create an immutable ledger of relationship- and immutable-behavior based transactions.

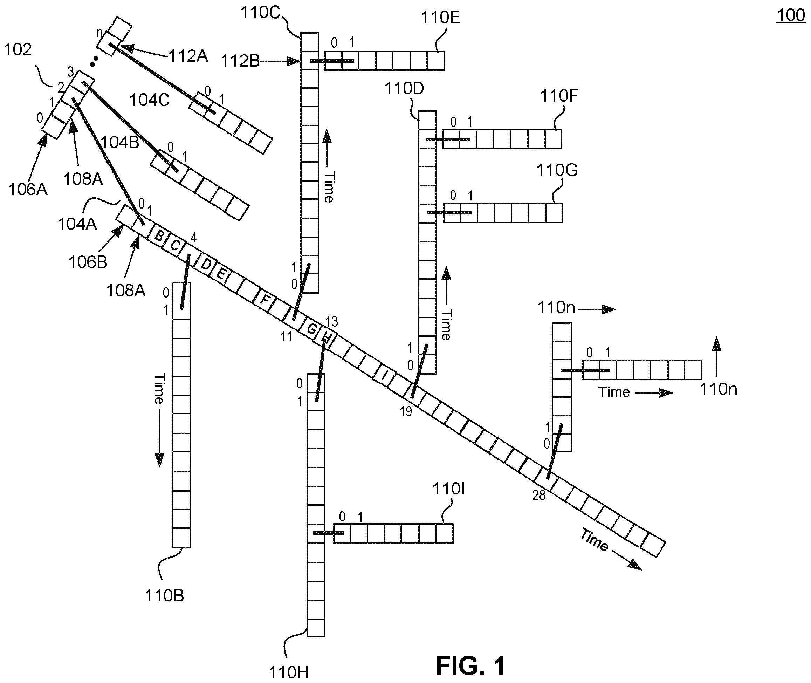

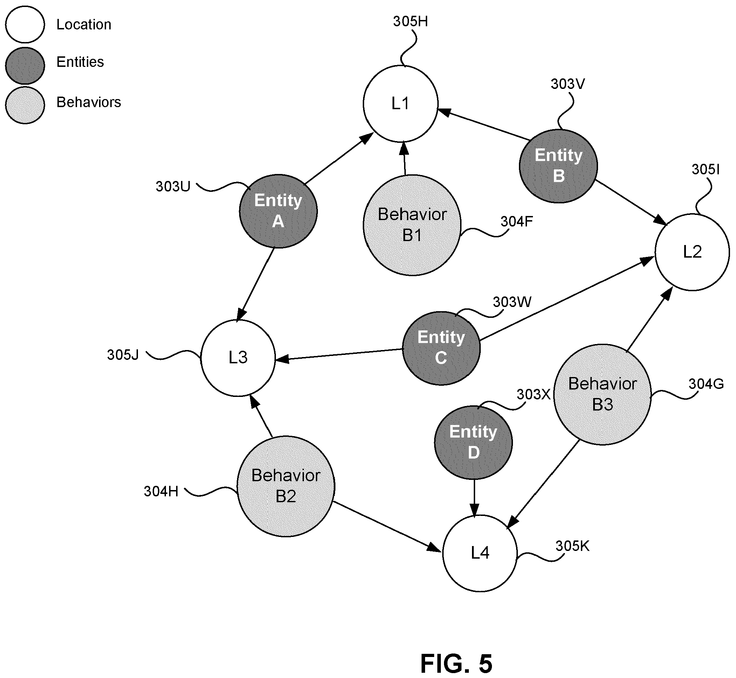

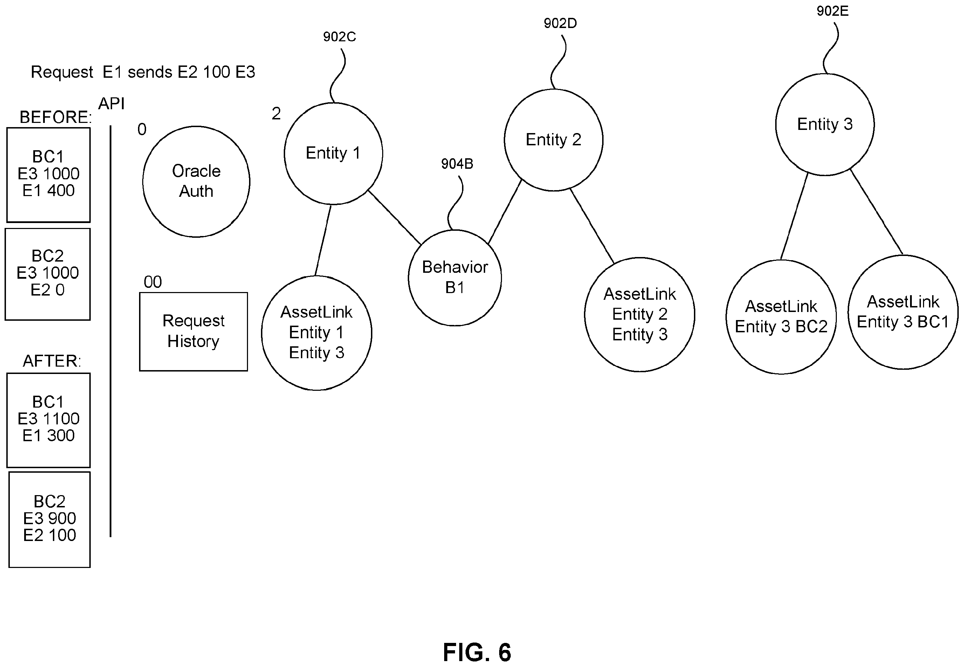

The state of all transactions consists of a combination of parallel-relationship streams-*i.e.*, an enormous amount of relationship transactions may be handled in parallel, but for each specific relationship, each transaction may be handled sequentially. Unlike traditional digital ledger or blockchain solutions where all transactions compete for inclusion in blocks, each transaction in the disclosed platform knows precisely which chain and block it will occupy from the outset. This allows for both high levels of parallel processing for transactions and ensures that each transaction for a relationship is handled in the order it occurs. There is no competition for blocks, processing, or validation. This approach to governance within the N-dimensional blockchain structure is discussed in further detail below with reference to FIGS. 1-9.

A further technical benefit may be achieved by writing an enforcement mechanism (*e.g*., smart contract, an append-only structure, a blockchain transaction, a journaling protocol, a cryptographic assurance, a non-volatile protocol, a circuit-controlled protocol, function, procedure, etc.) into the N-dimensional blockchain structure that performs the tasks required by recorded behaviors. The enforcement mechanism provides immutability and transparency in method and operation. The enforcement mechanism may be software code that performs the tasks needed to accomplish the behavior. For some use cases, the enforcement mechanism may be specific to a particular behavior in a particular relationship. Other enforcement mechanisms may be designed to perform generalized behaviors/tasks that may be reused across relationships. By writing the enforcement mechanism immutably into the N-dimensional blockchain structure, the approach optimizes transaction recording because the result of a task for each behavior sufficiently records a transaction between entities in the relationship. The results of a task may include inputs, outputs, decisions, variables, and any other component required to complete the task. Given the permanent and tamperproof governance information in the first blockchain, recording the results of the task suffices to provide immutable, accurate recordkeeping. The second blockchain may inherit, reference, or duplicate the enforcement mechanism. In some embodiments, an enforcement mechanism may reside elsewhere in the N-dimensional blockchain structure and be referenced by first blockchains and/or second blockchains. In embodiments using strong enforcement, the enforcement mechanism may be included in a block or blocks that follow the linking blocks and set the behavior/task structure. The enforcement mechanism is then followed by transaction blocks.

A further technical benefit is achieved because the disclosed technique promotes the interoperability of blockchains. The N-dimensional blockchain structure may incorporate other distributed ledger technologies and storage mechanisms into the platform. A first relationship may operate on an entirely different blockchain chain than a second relationship within the disclosed platform. This approach allows the N-dimensional blockchain structure to integrate off-chain storage structures (relational databases, text files, etc.).

A further technical benefit may be achieved by supporting chain mirroring within an N-dimensional blockchain structure. Generally speaking, mirroring records transactions in duplicate in separate locations by synchronizing a "mirrored" location with a "primary" location. Given the varied protocols that govern disparate types of blockchains (and off-chain sources), legacy blockchain applications fail to support chain mirroring across various types of ledgers. An appropriately crafted enforcement mechanism written immutably into the first blockchain may support mirroring in the N-dimensional blockchain structure.

A further technical benefit may be realized by supporting chained relationships in the N-dimensional blockchain structure. By writing governance that includes a first relationship to the first blockchain, the first relationship may serve doubly as an entity in a second relationship. This approach to governance enhances the flexibility of the structure, allowing the N-dimensional blockchain structure to serve additional and more complex use cases.

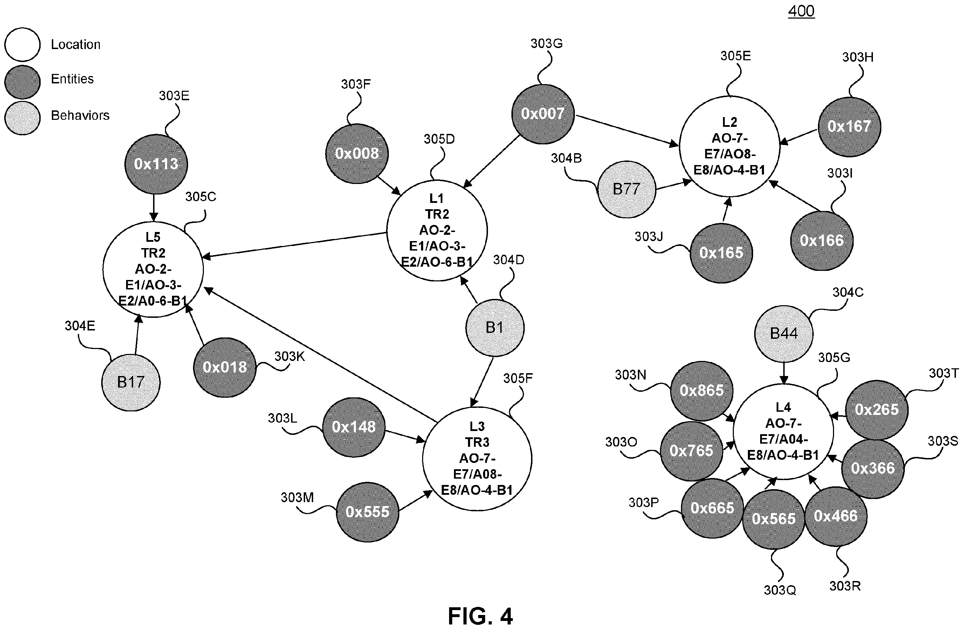

A further technical benefit may be realized by using graph technologies to capture the recorded governance information (entities, behaviors, and relationships). Graph technologies support fast retrieval of information. Working in concert, graph and blockchain technologies together provide both high performance and feature rich relationships with the provenance and chain of custody controls required for guaranteed ordering. Benefits of this fusion of blockchain and graph technology include significant reduction in transaction times and significant increase in search speeds. Graph technology allows multi-dimensional relationships to be retrieved without linear blockchain traversal-*e.g*., a single graph query can retrieve all relationships in the N-dimensional blockchain structure to which a particular entity belongs, what behaviors have been transacted against, etc. without requiring linear blockchain traversal, which is inherently slow. Graph technology also allows retrieval of data relationships that other storage mechanisms or databases cannot support. For example, a graph may support: (1) a search for the entities involved with particular behaviors, (2) a query on the 'proximity' of one actor to another, or (3) a query on the 'size' of the network in which an entity is involved in. Graph technology may also support the routing of transactions to a particular block, blockchain, or off-chain location based on a behavior allowing the transaction to be written to that location. Graph technology may support routing in other use cases and contexts. A wide-array of additional functions, behaviors, and uses of graph technologies in tandem with the N-dimensional blockchain structure are performable, as would be understood by a person of ordinary skill in the art. The use of graph technologies in concert with the N-dimensional blockchain structure is discussed in further detail below with reference to FIGS. 4-7.

Additional technical benefits of the disclosed technique include transactional flexibility, chain destruction, capability borrowing, capability duplication, catalog availability, market power coordination, and the elimination of bridge hacks. These benefits are discussed in further detail below.

### Immutable Governance

This section describes a robust, high-performance, and resilient technology platform enabling the promise of blockchain and Web3 including cryptocurrencies and tokens, provenance providers, and trusted applications. The disclosed platform may leverage established technologies and foundational stacks to implement next-generation applications in the wider blockchain ecosystem. With core components from hyper-scale, high-performance computing, messaging middleware, and Web3, the platform creates new capabilities for the Web3 ecosystem from layer-1 to higher-level distributed applications.

One of the foundational technologies employed by the disclosed solutions is the N-dimensional blockchain structure described in U.S. Application No. 16/812,848, now U.S. Patent No. 11,023,458, titled "Systems and Methods for Blockchain Interlinking and Relationships," which is hereby incorporated by reference in its entirety.

FIG. 1 illustrates an example N-dimensional blockchain structure, *i.e.,* structure 100, according to some embodiments. The specific composition of structure 100 provided in FIG. 1 is merely exemplary.

It is important to note that for ease of explanation, this disclosure refers to blockchains 104A-104C and 110B-110n, respectively, as "first blockchains" and "second blockchains." However, alternative terminology may apply. For example, first blockchains 104A-104C may be referred to as antecedent blockchains, core blockchains, parent blockchains, governing blockchains, etc. Similarly, second blockchains 110B-110n may be referred to as decedent blockchains, sub-blockchains, child blockchains, governed blockchains, etc. Familiar relationships may describe relationships between different chains, *e.g*., second blockchain 110B and second blockchain 110H may be referred to as sibling blockchains, second blockchain 110I and second blockchain 110E may be referred to as cousins, etc. Other suitable terminology may apply to adequately convey the role and relationships of the various chains in distributing governance information across structure 100.

Additionally, this "first" and "second" nomenclature does not imply that a hierarchical nature exists within structure 100. While the chain at 110H may be referred to as second blockchain 110H, second blockchain 110H may doubly serve as the "first blockchain" with respect to second blockchain 110I. In this regard, as the N-dimensional blockchain structure expands, structure 100 may include blockchains that serve both as a "first blockchain" and a "second blockchain."

As illustrated in FIG. 1, structure 100 may include core blockchain 102, first blockchains 104A-104C, genesis blocks 106A-106B, header block 108A, and second blockchains 11 0B-11 0n.

Core blockchain 102 may include a genesis block (genesis block 106A) and blocks (in FIG. 1, numbered 0, 1, 2, 3 ... n) linked to first blockchains 104A-104C. Core blockchain 102 may store logic that specifies conditions under which to create an additional linked blockchain. This ability to dynamically create new chains improves the atomic reliability and overall transactional availability of structure 100 because maintaining shorter blockchains provides a means to move new operations away from larger blockchains as operational requirements demand. In some embodiments, this logic may take the form of a smart contract or other suitable computer program. For example, the logic may specify that core blockchain 102 should create an additional blockchain each day at noon. In such an example, day after day, core blockchain 102 would add an addition blockchain at noon. In an embodiment, this logic may be sharding logic that implements a series of shards by providing programmable rules that define sharding criteria. In such a sharding scheme, horizontal partitioning of data may be achieved by deriving a shard key from the data of interest using algorithms including modulus, consistent hashing, or text mapping.

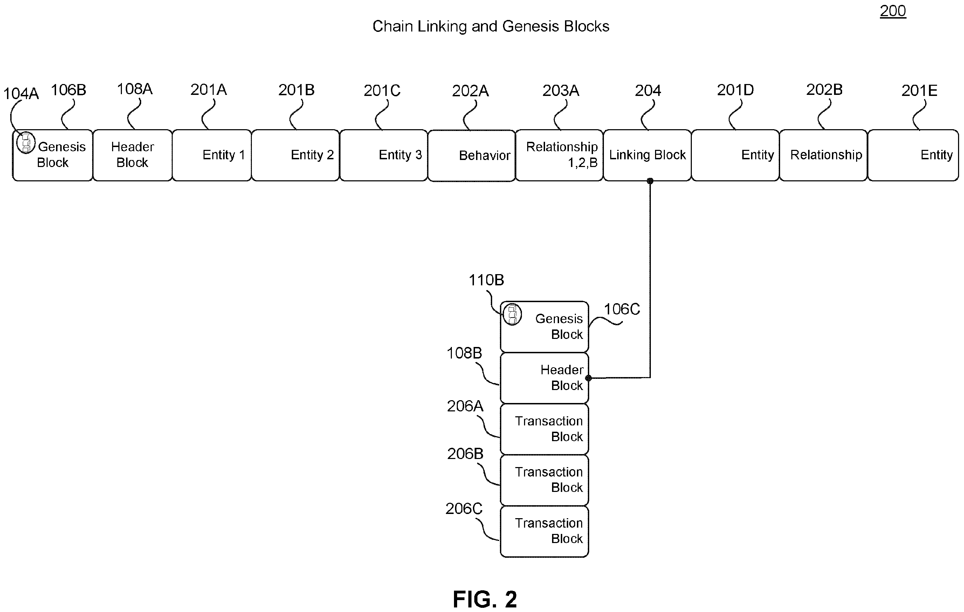

First blockchains, such as first blockchains 104A-104C, may include genesis blocks (*e.g*., genesis block 106B) and header blocks (*e.g*., header block 108B). While FIG. 1 illustrates three blockchains as first blockchains 104A-104C, this is merely exemplary, and core blockchain 102 may create any number (even hundreds, thousands, millions, etc.) of first blockchains 104-104C to facilitate the extensibility of the N-dimensional blockchain structure. First blockchains 104A-104C may record information about entities, behaviors, and relationships, and blockchain links. This information may cumulatively be referred to as "governance information." In one embodiment, governance information may be included in a single block in a first blockchain. However, in other implementations, governance information may be separated into distinct block types. The governance information of a second blockchain may include provenance and end-to-end, behavior-transaction traversal, but may not impede or influence the transactional nature or functionality of a governed second blockchain after the initial creation of the second blockchain. The nature of governance information and further details on entities, behaviors, and relationships are discussed in further detail below with reference to FIG. 2.

Genesis blocks, such as genesis block 106A and genesis block 106B, may be the initial block on a blockchain. For example, in FIG. 1, the block labeled "0" is genesis block 106A of first blockchain 104A.

Header blocks, such as header block 108A may hold metadata about the blockchain itself, which may include, but is not limited to, a reference to the linking block on core blockchain 102 or to a first blockchain, sharding implementation, currency or trading token, block type, value token, transactional cost, transactional hints, source and destination data types, source and destination repository types, etc. In some embodiments, a header block is the block immediately following a genesis block, such as genesis block 106B. For example, in FIG. 1, the block labeled "1" in first blockchain 104A is header block 108A of first blockchain 104A. The block labeled "1" in second blockchain 110B is the header block of second blockchain 110B.

Second blockchains, such as second blockchains 110B-110n, may record transactions as results of the one or more tasks needed to perform a behavior for a relationship between entities. The results of a task may include inputs, outputs, decisions, variables, and any other component required to complete the task. Second blockchains 104A-C may also include genesis blocks and header blocks. Second blockchains 110B-110n may simultaneously serve as "first blockchains" by also recording information about entities, behaviors, and relationships, and links to second blockchains. For example, blockchain 110C is both a "second blockchain" with respect to blockchain 104A and a "first blockchain" with respect to blockchain 110E.

In structure 100, links are illustrated by the lines connecting the individual blockchains. For example, FIG. 1 illustrates a link between core blockchain 102 and first blockchain 104A and links between first blockchain 104A and second blockchain 110B and second blockchain 11 0H. In some embodiments, on a first blockchain, a linking block is the block that contains reference information to jump to a second blockchain. In one embodiment, this linking block may include metadata that specifies a new genesis block, a blockchain identifier, a sharding implementation, and owning entity for the second blockchain. A genesis block identifier may also be recorded as part of the metadata in the linking block on a first blockchain. FIG. 1 also illustrates linking blocks. For example, block "2" of core blockchain 102 is a linking block, which is linked to header block (block "1") of first blockchain 104A. Block "4" of first blockchain 104A is a linking block, which is linked to the header block (block "1") of second blockchain 110B.

In some embodiments, first blockchains 104A-104C and second blockchains 110B-110n may leverage a single value or utility token determined at creation. A value and a utility token are the same or similar. In other embodiments, a value token may be different than a utility token. A utility token may provide only the necessary fuel or power behind a behavior which is recorded in a blockchain, whereas a value token may provide for power behind a behavior and may acquire quantitative value in its own right, making the value token itself a desirable asset. First blockchains 104A-104C and second blockchains 110B-110n may be created with a specific value token determined through referential query of the blockchain type. In some embodiments, the value token identifier is included in the blockchain identifier.

FIG. 2 illustrates linked structure 200 having a first blockchain linked to a second blockchain, according to some embodiments. Specifically, FIG. 2 refers to first blockchain 104A and second blockchain 110B from FIG. 1. However, the use of these chains in particular is merely for ease of illustration, and the characteristics of the chains and governance information discussed below applies to first blockchains and second blockchains, generally. In both FIG. 1 and FIG. 2, first blockchain 104A governs second blockchain 110B, and second blockchain 110B is subordinate to first blockchain 104A.

In FIG. 2, first blockchain 104A includes genesis block 106B, header block 108A, entity 201A, entity 201B, entity 201C, behavior 202, relationship 203A, linking block 204, entity 201D, relationship 203B, and entity 201E. Second blockchain 110B includes genesis block 106C, header block 108B, and transaction blocks 206A-206C.

Entities 201A-201C may be written to first blockchain 104A. An entity may be an actor in an ecosystem-*e.g*., an entity may represent a human actor, account, object, wallet, token, group, combinations of outputs from behaviors, a process, a computer an artificial intelligence construct, an avatar representing an actor or action, an expression or function comprising actions, or any concept of potentially taking action in a behavior. Information associated with the entities may include entity attributes that describe the entity including: entity type, entity token, entity creation timestamp, entity creation endpoint, entity creation transaction, observational records, etc. This disclosure refers to entities such as human actors, account actors, or token actors as "actor entities." This disclosure refers to combinations of entities, behaviors, and relationships as "relationship entities."

Behavior 202A may be written to first blockchain 104A. A behavior may represent the building blocks or tasks for constructing bounded automata. A behavior may describe the mechanism by which entities interact, transact, or act upon each other, providing the context for governing and transacting between entities. Collectively, behaviors may provide a rich catalog for creating complex operations and a means by which those operations may be valued and immutably stored. A behavior may be composed of one or more tasks that must be completed to achieve the desired result. In one embodiment, an enforcement mechanism may be written in behavior 201. The enforcement mechanism may be a smart contract, append-only structure, blockchain transaction, journaling protocol, or other form of code that performs the tasks while providing immutability and transparency in method and operation.

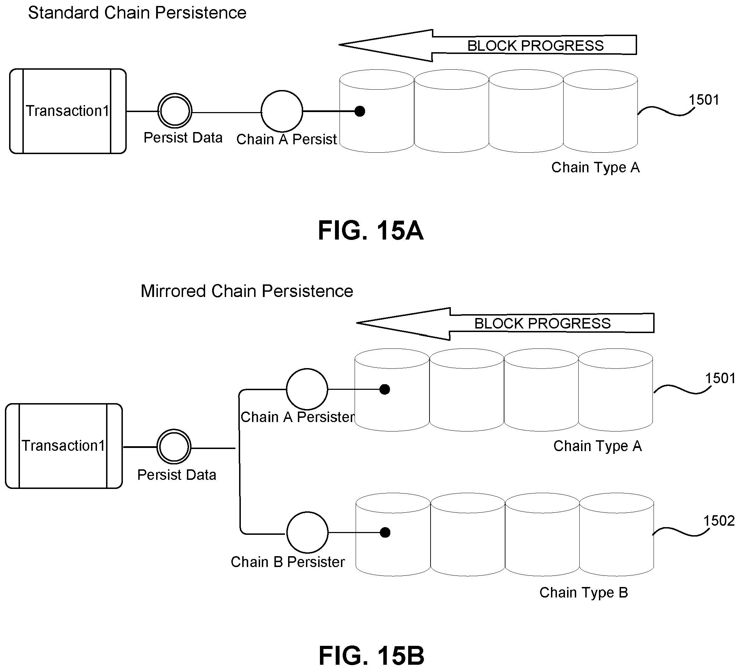

Relationship 203A may be a codified link between at least one entity and at least one behavior. While typically multiple entities transact, certain relationships may involve a single entity performing a behavior. Generally, a relationship's characteristics are captured as attributes. Relationships may be abstracted as additional inputs to form other relationships with additional behaviors and entities. In this regard, chained relationships may be used as building blocks for more complex behaviors. Chained relationships are discussed in further below with reference to FIGS. 15A and 15B.

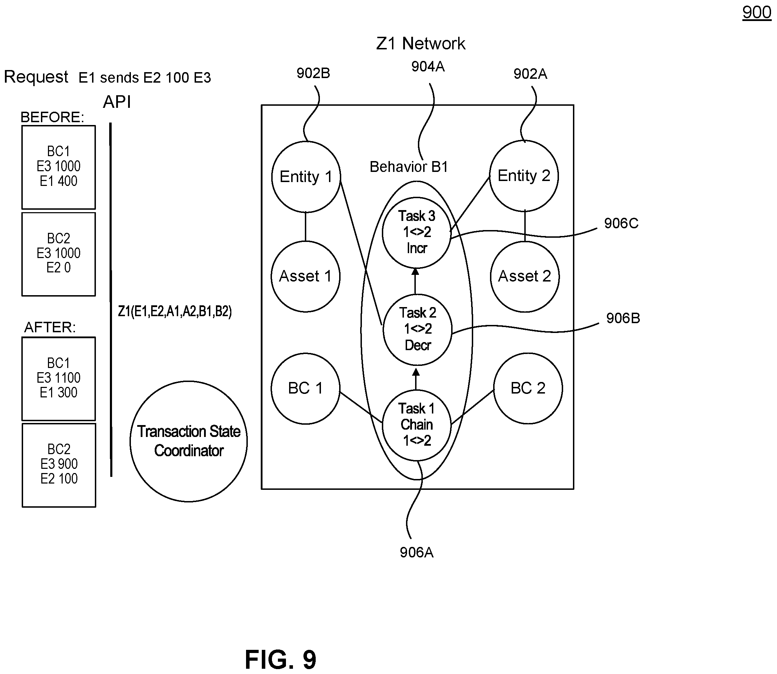

FIG. 9 further demonstrates these concepts of entities, behaviors, and relationships. FIG. 9 illustrates relationship 900 involving an asset-based exchange. Here, actor "E1" sends actor "E2" an asset "E3". Relationship 900 consists of the entities (entity 902A and entity 902B), assets (Asset 1, Asset 2), and behavior 904A having task 906A (Link), task 906B (Decrement), and task 906C (Increment). The first task (Link) sends messages to chain 1 and chain 2-these messages ensure that the assets exist on the respective chains before making a transfer. The behavior continues with the tasks of decrementing and incrementing the appropriate assets owned by the entity. The end result of this immutable behavior, related entity, and assets inputs is a move of an asset on chain 1 to chain 2. In an embodiment, relationship 900 is immutably written to the linking block of the first blockchain and the header block on a second blockchain as an enforcement mechanism. A graph database may be updated accordingly to reflect relationship 900.

For future transactions, the platform may merely write the results of the tasks into the appropriate second blockchain. Thus, every transaction conducted between "E1" and "E2" to transfer "E3" may be recorded in the second blockchain with minimal overhead. This transaction need not be limited to a particular amount of E3 (*e.g*., 100, in FIG. 9). A behavior may be crafted that allows any asset value to be transacted between any entities (*e.g*., 100, 500, 1000, etc.) that may be reused by multiple entities. Conversely, a behavior may be created that only allows a specific value to be transacted and between particular entities, *e.g*., only 10000 E3 and only between E1 and E2. Any interaction may be represented provided an appropriate function (*i.e*., the tasks) is created that results in the correct output. A relationship may be created for transactions conducted between other entities, though behavior 904A may be reused in other relationships. Other relationships may include different entities, assets, and behaviors. Other relationships could conduct transactions on different second blockchains. In one embodiment, an enforcement mechanism may be understood as a network that encompasses the entities, behaviors, and relationships. In the example in FIG. 9, the network is labeled "Z-network" and may include all components needed to move asset E3 from E1 to E2 using B1. This Z-network may be called like a function, *e.g*., Z1(E1, E2, A1, A2, B1, B2). The Z-network may also mimic a network in the graph.

Several additional examples illustrate such relationships. As an example, the notion of submitting information may be abstracted-an actor of "Freelance Journalist" may send a news story to an actor of "Newspaper Editing Desk" for printing. The relationship may be called "submitStory" and the relationship may have characteristics including language, length, topic, payment_rate_per_word, acceptance_criteria, byline, etc. In this example, general behavior between Journalist and Newspaper may include a transfer of information with certain attributes (a first task) and positive or negative acknowledgment of that transfer (a second task). This in turn allows for a patterned method of implementing the data transfer, the acceptance of the transfer, how to handle state changes in the automata, creation of discrete time intervals for the activity, and a means by which value may be attached to the abstract machine. In another example, an actor of "Artist" might mint a non-fungible token ("NFT") for an actor of "Marketplace." The relationship may be called "mintNFT" and may have characteristics including medium, media_type, color_map, signature, title, collection id, collection_number, etc.

Returning to FIG. 2, linking block 204 may link first blockchain 104A to header block 108B of second blockchain 110B. In some embodiments, linking block 204 and/or header block 205 may contain governance information including the behavior, relationship, and structure of the two related blockchains. Linking block 204 and/or header block 108B may also include an enforcement mechanism to perform the tasks comprising behavior 202A. The enforcement mechanism may be immutable, static, and un-modifiable. The enforcement mechanism may receive one or more inputs and perform the enforcement mechanism using the inputs as parameters. The enforcement mechanism may be a smart contract, append-only structure, blockchain transaction, journaling protocol, or other form of code that performs the tasks while providing immutability and transparency in method and operation. In embodiments using strong enforcement, the enforcement mechanism may be included in a block or blocks that follow the linking blocks of the second blockchain to set the behavior/task structure for the chain.

Second blockchain 110B may capture transactional data for a relationship created on first blockchain 104A having at least one behavior and at least one entity. In second blockchain 110B, header block 108B immediately follows genesis block 106C. Second blockchain 110B may function independently from a governing first blockchain (here, first blockchain 104A) for behavior and performance. Transaction blocks 206A-206C may record transactions conducted under the stored relationship (here, relationship 203A). Because the enforcement mechanism for conducting the relationship is immutably written in the blockchain structure, a transaction may be recorded as the results of the tasks of behavior 202A. The results of a task may include inputs, outputs, decisions, variables, and any other component required to complete the task. Given the permanent and tamperproof governance information in the first blockchain, the functional results suffices to ascertain retroactively and with certainty the details of the transaction.

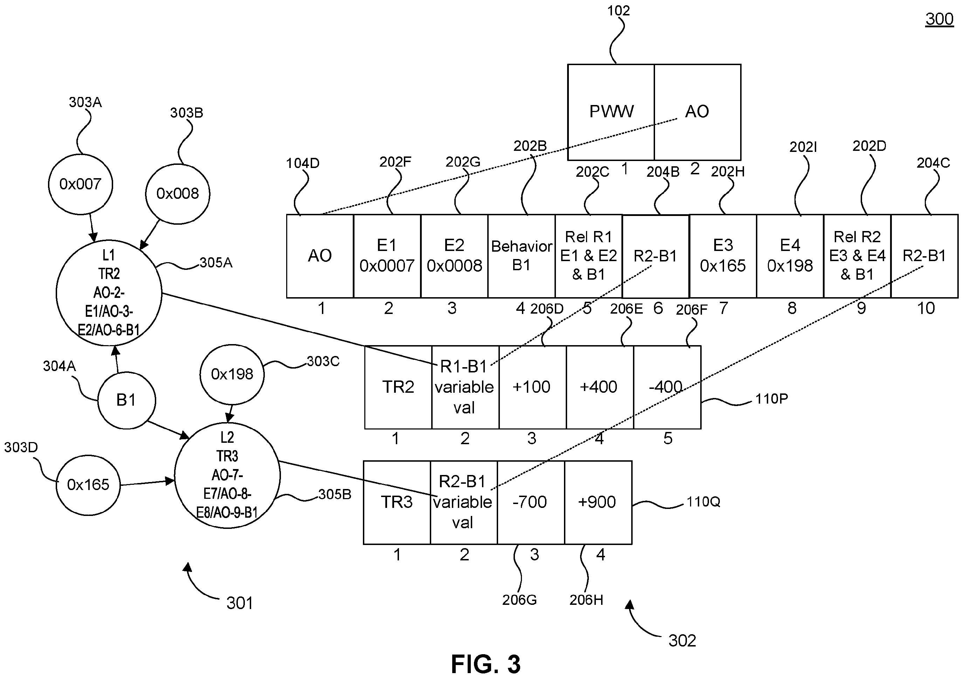

FIG. 3 illustrates linked structure 300 depicting entities, behaviors, and relationships written to blocks of an N-dimensional blockchain structure, according to some embodiments. Specifically, linked structure 300 includes linked structure 302 having core blockchain 102, first blockchain 104D, second blockchain 110, and second blockchain 110Q. However, the use of these chains in particular is merely for ease of illustration, and the characteristics of the chains and governance information discussed below applies to first blockchains and second blockchains, generally. In FIG. 3, first blockchain 104D governs second blockchain 110P and second blockchain 110Q.

In FIG. 3, relationship 202C includes behavior 202B between entity 202F and entity 202G. Relationship 202D includes behavior 202B between entity 202H and entity 202I. Each relationship is reflected with separate linking blocks, linking block 204B and linking block 204C, to second blockchain 110P and second blockchain 110Q, respectively. These second blockchains then record the transactions (transactions 206D-206H) conducted under the relationship.

### Graph Technologies

Graph technologies may work in concert with the blockchains in the N-dimensional blockchain structure to significantly reduce transaction times and significantly increase search speeds. As discussed above, the disclosed platform recognizes an improvement by treating the specific combination of entities and behaviors (made up of tasks) as an immutable construct. This relationship construct may be written into linking blocks and header blocks on the N-dimensional blockchain structure and reflected in the graph.

In FIG. 3, linked structure 300 may also include graph representation 301. Graph representation 301 may include nodes and links (edges) recorded using a graph database or other suitable graph technology. Graph representation 301 may include entity nodes 303A-303D, behavior node 304A, and location nodes 305A-305B. In FIG. 3, entity nodes 303A-303D correspond to entities 202F-202I, location nodes 305A-305B correspond to header blocks of the second blockchains, and behavior node 304A corresponds to behavior node 204B. The links between these nodes represents a relationship and may be recorded in a graph database as edges between two nodes.

FIGS. 4-6 illustrate graph representation 400, graph representation 500, and graph representation 600, respectively. Graph representation 400, graph representation 500, and graph representation 600 include entities, behaviors, and locations in the N-dimensional blockchain structure represented in a graph-based format, according to some embodiments.

Applying a suitable graph technology, multi-dimensional relationships may be retrieved without linear blockchain traversal. For example, a single graph query may retrieve all relationships in the N-dimensional blockchain structure to which an entity belongs. This can be completed without traversing the blockchains. For example, in FIG. 4, a graph query could be formulated to retrieve all transaction locations in the N-dimensional blockchain structure in which entity node 303G ("0x007") was a participant. By examining the links between entity 303G and associated locations and behaviors, linear traversal of a blockchain structure is unnecessary.

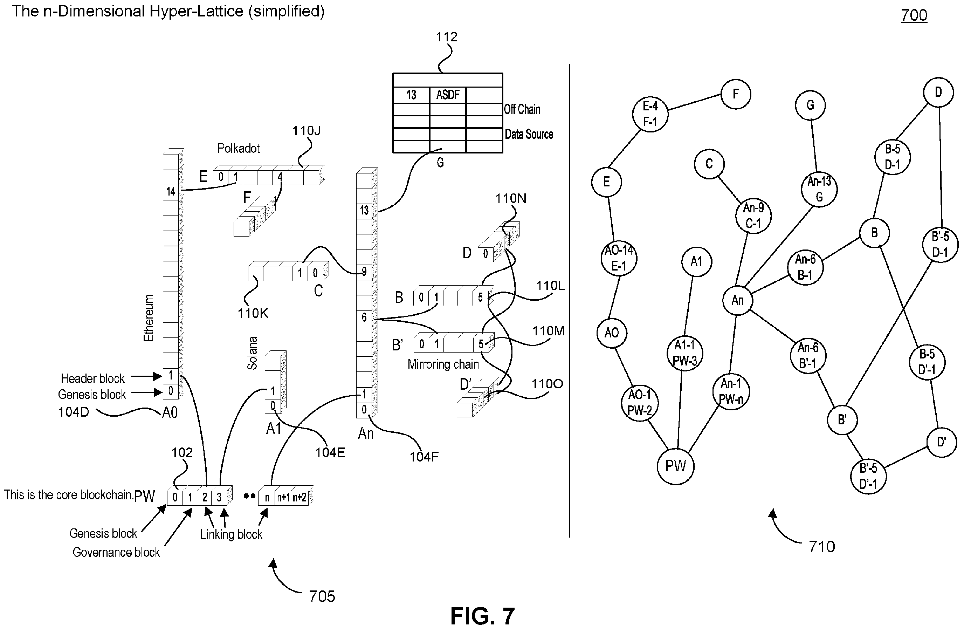

FIG. 7 illustrates an environment 700 having another exemplary N-dimensional blockchain structure, structure 705, and corresponding graph 710. As discussed above, structure 705 relies on static, immutable governance that is associated with each individual chain and that represents the entities, behaviors, and relationships. Transactions on the chain constitute the behavior and cannot be altered once created. This means that while these transactions are recorded on-chain, alterations to the methodology of that chain are not permitted. This differs from the common approach to blockchain implementations where the relative value of the transaction with regards to a common blockchain creates the means by which validation and confirmation of those transactions occurs.

Structure 705 includes core blockchain 102, first blockchains 104D-104F, and second blockchains 110J-110O. Structure 705 also includes off-chain data source 112. Off-chain data source 112 may include databases, files, key-value stores, programmatic outputs, constants, memory addresses and regions, hardware devices, key stores, cryptographic wallets, and other suitable data sources outside of a blockchain structure. Structure 705 may also include data sources by writing appropriate governance information to first blockchain 104F. In an embodiment, governance information to support off-chain data sources may include an enforcement mechanism crafted to access a particular type of data source.

Graph 710 includes a representation of the behaviors, locations, and entities included in all core and all first and second blockchains in structure 705. Each unique entity, location, and behavior is recorded as a node in graph 710. All relationships between blockchains, entities, behaviors, and locations are represented as links (edges) in graph 710.

### Architecture Incorporating the N-Dimensional Blockchain Structure

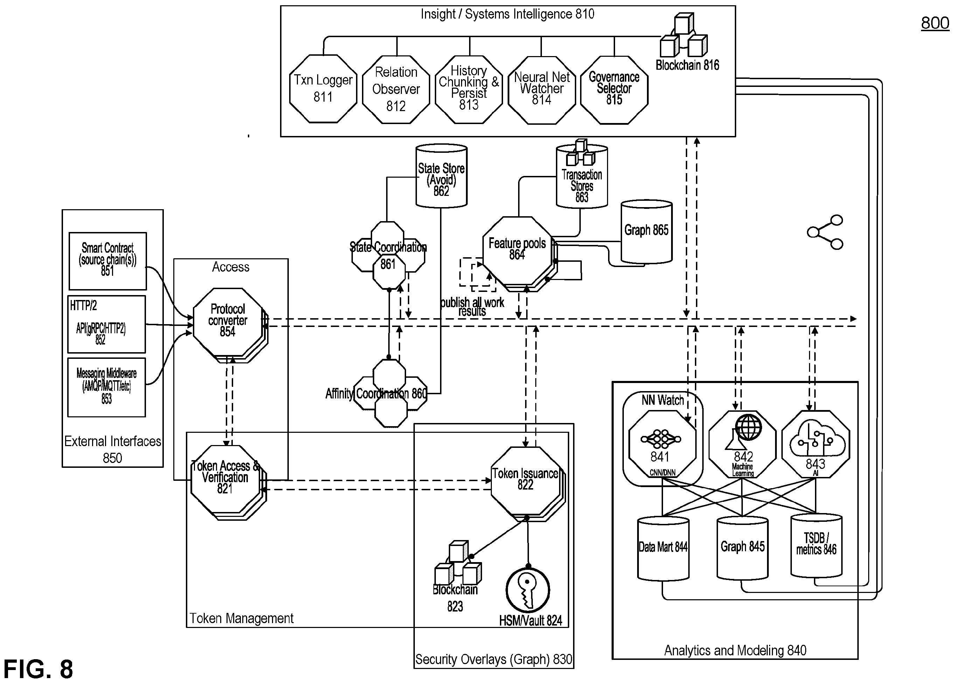

FIG. 8 illustrates architecture 800 that uses an N-dimensional blockchain structure and a corresponding graph to provide external interfaces that serve a variety of use cases. The disclosed innovation presents a new approach to blockchain applications that ensures that the best features of blockchain-single-path, immutable persistence-co-exist alongside the ability to scale, perform, and search. The disclosed architecture uses an N-dimensional blockchain structure that may be built of a multitude of individual blockchains, which may all be the same or may be based on different blockchain platforms (*e.g*., Bitcoin, ETHEREUM, SOLANA, POLKADOT, CARDANO, AVALANCE, HYPERLEDGER, to name a few). The capabilities of search, messaging, serialization, and strong cryptography are layered on the structure.

Architecture 800 may include systems intelligence 810, txn logger 811, relation observer 812, history chunking & persist 813, neural net watcher 814, governance selector 815, blockchain 816, token management 820, token access & verification 821, token issuance 822, blockchain 823, HSM/Value 824, security overlays 830, analytics and modeling 840, CNN/DNN 841, machine learning 842, artificial intelligence 843, data mart 844, graph 845, TSDB metrics 846, external interfaces 850, smart contract 851, HTTP/2 852, messaging middleware 853, protocol converter 854, affinity coordinate 860, state coordination 861, state store 862, transaction stores 863, feature pools 864, and graph 865.

In FIG. 8, blockchain, 816, transaction stores 863, and graph 865 may represent the N-dimensional blockchain structure and graph database technologies discussed above. However, blockchain 816, transaction stores 863, and graph 865 may be incorporated into a myriad of system architectures. In this regard, FIG. 8 is merely illustrative and does not restrict the function of these component to a particular architecture.

The disclosed approach leverages industry best practices for cryptographic operations. Key management is handled through the use of hardware security modules to access particular chains, blocks, and accounts. These hardware security modules may themselves be governed and sharded as required according to the governance rules. In this manner there is no set of keys which "hold the kingdom" in any location, and there is always at least one on-chain and one off-chain mechanism to recover and govern keys for any atomic transaction.

The disclosed embodiments build on a fabric of individual blockchains stored in the N-dimensional blockchain structure. The data model divorces the chain from the data which it stores, much in the same manner in which a database abstracts its structure from the content of the data stored within. In this way, the disclosed architecture uses blockchains as "storage engines" with their individual characteristics intact.

The approach illustrated in architecture 800 brings diagonal scaling to the technology space by relying on middleware fabric where messaging delivers data and control. This allows for simple integration to a framework characterized by an event-driven architecture with powerful additive capabilities. Graph technology and blockchain deliver breadth of operation and reliable provenance, respectively. This combination creates a platform designed for unprecedented scale that retains the key provisions of safety, trust, and verifiability of a Web3 ecosystem.

### Chain Mirroring

FIGS. 15A and 15B illustrate an example of blockchain 1501 and blockchain 1502 providing similar and dissimilar mirrors for the transaction data. For instance, to provide resiliency against software-level corruption in blockchain 1501, an alternate blockchain 1502 might be used to persist the transaction data simultaneously. RAID systems refer to this as "data mirroring." Common uses for mirroring include fault tolerance, failure isolation, future-proofing, performance enhancements, and a whole host of other uses. By writing an appropriately crafted enforcement mechanism immutably into the first blockchain, the N-dimensional blockchain structure may support mirroring. This approach results in a "mirrored" location remaining synchronized with the "primary" location.

The platform may include governance information in the first blockchain that allows a mirror to function. The platform may create a mirrored blockchain or blockchains to record the transactions between the first entity and the second entity. Such a mirrored chain is reflected in FIG. 7 as second blockchain 110M, which is a mirror of second blockchain 110L. This same mechanism may be applied to multiple chains operating in parallel to mirror the primary blockchain.

A transaction recorded in such a mirrored scenario may then result in adding a first record block to the second blockchain (*e.g*., second blockchain 110L in FIG. 7) and a second record block to the mirrored blockchain (*e.g*., second blockchain 110M in FIG. 7). The first record block and the second record block may be congruent. As discussed above, the record block may include the results of the task(s) needed to complete the behavior.

### Transaction Flexibility

The disclosed technique is fundamentally a fractal method for designing data storage by reference to the entities involved in the relationships governing that data. This is a sea change in handling atomic transactions as it allows for an ever-expanding platform to accommodate ever-expanding data without impacting the atomic performance of any transaction in the system. That is to say that atomic transaction performance is consistent with regards to the application infrastructure and software efficiency to conduct the transaction. The performance does not depend on the behavior of any particular transaction type.

The governance of relationships controls the type of transaction. For example, in a traditional system, architects may decide to use a system of flat files for holding document data and a small database to hold data which relates those documents together. Any transaction involving the data must either be conducted using flat files, the relational database, or a combination of the two. The means by which the transactions-whatever they may be-are conducted is predetermined by the architecture and software design.

In the disclosed approach, each transaction type is defined only by the behavior and entities involved in that transaction. The platform may therefore determine control structures based on the relationship and not external constraints. This creates a highly flexible platform design that can adapt to any transaction type and to any data which might need to be involved in transactions. For systems designers, a particular instance may be as wide or as narrow as the use cases require. Changes may be made using additive computing principles.

### Chain Resiliency

Because data storage is a combination of a persistence engine attached to a transaction, the capabilities of actually storing data are divorced from the supporting infrastructure. This means that traditionally transient methods can be attached to traditionally consistent and durable transaction workflows and vice versa. Chain resiliency is an outgrowth of this concept wherein an atomic data persistence event functions much in the same manner as a write operation in RAID data systems. This feature may be used for backup and disaster recovery.

### Chain Destruction

Because persistence targets are controlled by relationships and new relationship governance creates wholly new targets, blockchains may be considered as permanent or transient as required. This does not mean that records on any blockchain can be deleted or altered. Rather, the platform may introduce the ability to destroy entire chains as required and permitted by governance.

This creates a range of possibilities for use cases including: (1) Destroying sensitive user information or financial data when required to do so through obligation or regulatory need; (2) Creating promotional or temporary chains to allow for provable transaction events for limited times or uses (Bingo calling, "13th caller to the radio station"); (3) Destroying an asset once its representative physical entity is no longer extant; or (4) "Lot tracking" as in ticket sales, auction lots, or other cases where there are a finite set of entities whose fundamental attributes will alter once a state change occurs (*e.g*., once the concert is over, the need for remaining tickets has ended).

### Capability Borrowing

A variation on the idea of bridging, capability borrowing is the means to use a function, method, or behavior which is native to one chain element within a use-case, flow, or larger behavior that is conducted elsewhere on other chains, off-chain, or with other unrelated contracts on the original platform. In much the same way that the disclosed solution implements a third-party bridge structure (discussed below), the same can be used to borrow capabilities.

For example, suppose Chain A provides a contract to verify the authenticity of a stablecoin on ETHEREUM. Any ETHEREUMcontract may use this contract to validate their holdings. In a custodial account (BINANCE, COINBASE, etc.), a person might want to provide access to a wrapped version of the same stablecoin. This is easily done as the product of a liquidity pool, but said person will not have access to the validation contract. Capability bridging allows for the creation of arbitrary contracts, oracles, or applications which can use the ETHEREUMcontract to validate data and make the inputs and results available to another contract in the custodial account.

### Capability Duplication

A variant of capability borrowing, called capability duplication, is the inverse of the case above. Rather than borrow the inputs and results, one might implement a contract which propounds the same behaviors as the ETHEREUMcontract. By leveraging capability duplication, the disclosed platform may push inputs into both contracts and compare results to ensure that the behavior of the contract matches that of its doppelganger.

Additionally, off-chain or private chain behaviors may be verified in the same manner. Even though public consumers may not have access directly to the off-chain or internal resource, the results of using these services can be made publicly available as a means of comparison and verification with their on-chain versions. This provides additional security and trustworthiness to the behaviors-making off-chain and permissioned-chain contracts and services more palatable to the heavily decentralized Web3 ecosystem.

### Catalog Availability

Examples of behaviors addressed by the above solution include patterns relating to digital assets like cryptocurrencies, fungible tokens, and non-fungible tokens ("NFTs"). These behaviors and sub-networks may be dynamically created in software so that third-parties or other developers can leverage parts of the platform to build their own behaviors. Towards this end, a catalogue of specific behaviors like asset creation, transfers, payments, loans, escrow, lien, notarization, titling, and any other relevant interaction in the financial space may be created and provisioned.

This approach is dynamic and presents the concept of behavior and task as a primitive that can be selected from a service catalog. In other words, a library of different behaviors and tasks may be built over time. A developer may then select the desired behaviors, create a small network, and write to the governance chain as a new network with micro-services that know how to interpret a new behavior and then run the code. Simpler components of behaviors, like tasks, can also be created or reused to build wholly new behaviors.

For example, FIG. 8 includes governance selector 815. Governance selector 815 may observe new z-patterns (*i.e*., networks/relationships including entities, assets, and behaviors like those described above) and track the written z-patterns. The tracked networks and behaviors may then be offered as a catalog to service designers.

### Market Power Coordination

A value holder or an on-chain custodian may seek to act as a collectivizer of market power across multiple chains and tokens. The technique described above of storing networks consisting of entities, assets, and behaviors in an N-dimensional blockchain structure may be leveraged by such a collectivizer. In such a scenario, the collectivizer may pool buying power. An on-chain custodian may use the N-dimensional blockchain structure to hold the pooled tokens. All pooled tokens may be stored in one account instead of many. The platform may execute one transaction to liquidate comprehensive buying power at the same time. The transaction can be settled in one block with distributions made at a later time to the composite accounts.

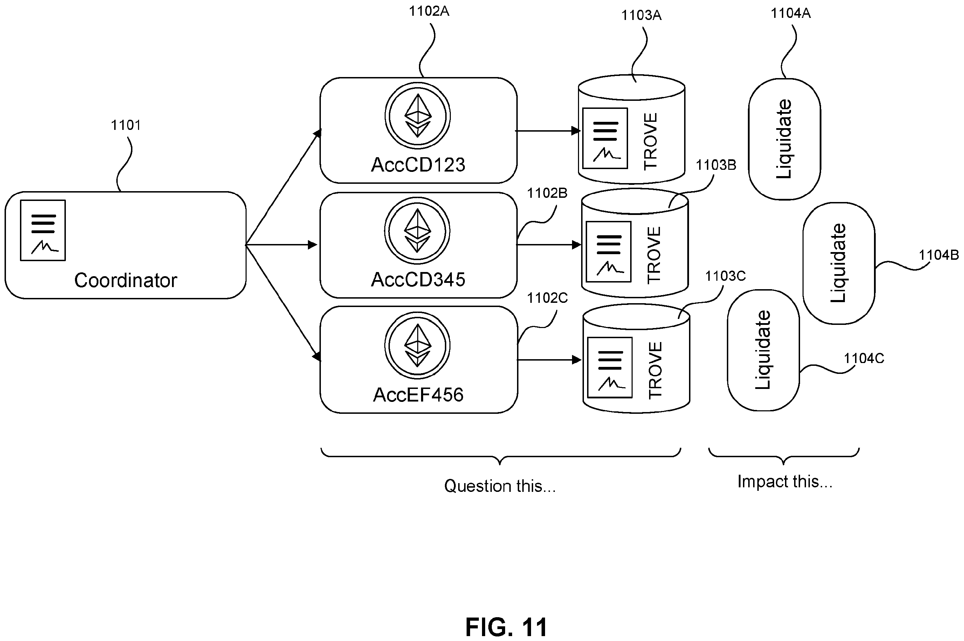

FIG. 11 is a diagram 1100 illustrating coordination among trove 1103A, trove 1103B, and trove 1103C in an asset-based exchange. Diagram 1100 also includes coordinator 1101, assets 1102A-1102C, and liquidate 1104A-1104C. By organizing governance in the above-described manner, the platform may allow troves to function across various types of blockchains and currencies. The platform would know the balance of all participants in the collective even if their assets are spread across multiple chains. Customers could participate in a trove even without having an account in that chain. The purchase power could be specified in a bridge contract. Because the approach is multi-chain, a total amount of market power may be determined that spans multiple chains.

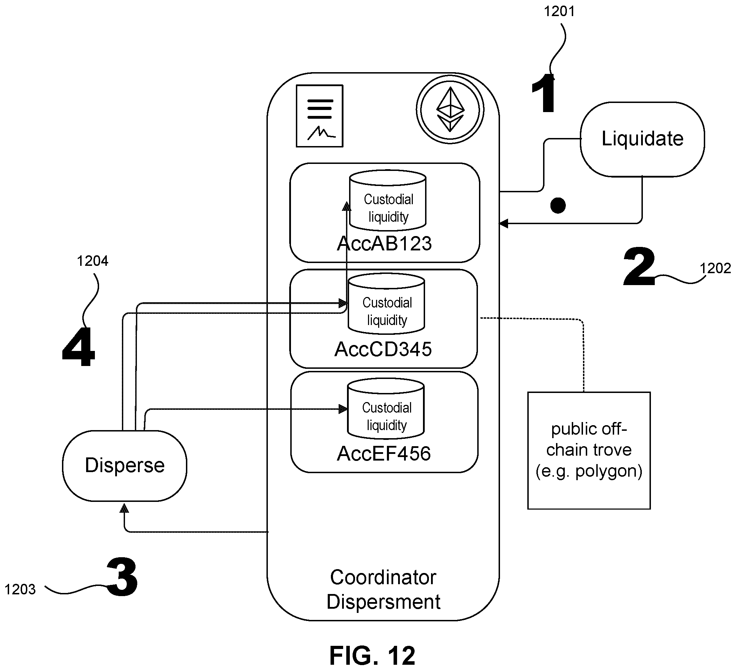

FIG. 12 is a diagram 1200 illustrating coordinated disbursement in an asset-based exchange. Traditional approaches require sending tokens to participants to send value. These approaches lock up tokens and sell the tokens when the token reaches a certain value. Frequently, all the troves have the same limit, *i.e*., the same condition, but at different vector times. The troves may trigger slightly differently and compete to be able to sell the same value in slightly different amounts all at the same time, each person getting a slightly different rate for the sale. This trove action has caused problems in legacy approaches to collectivizing market power.

### Eliminating Bridge Hacks

This section describes the use of the N-dimensional blockchain structure and immutable governance to eliminate or reduce hacking vulnerabilities in current bridging architectures.

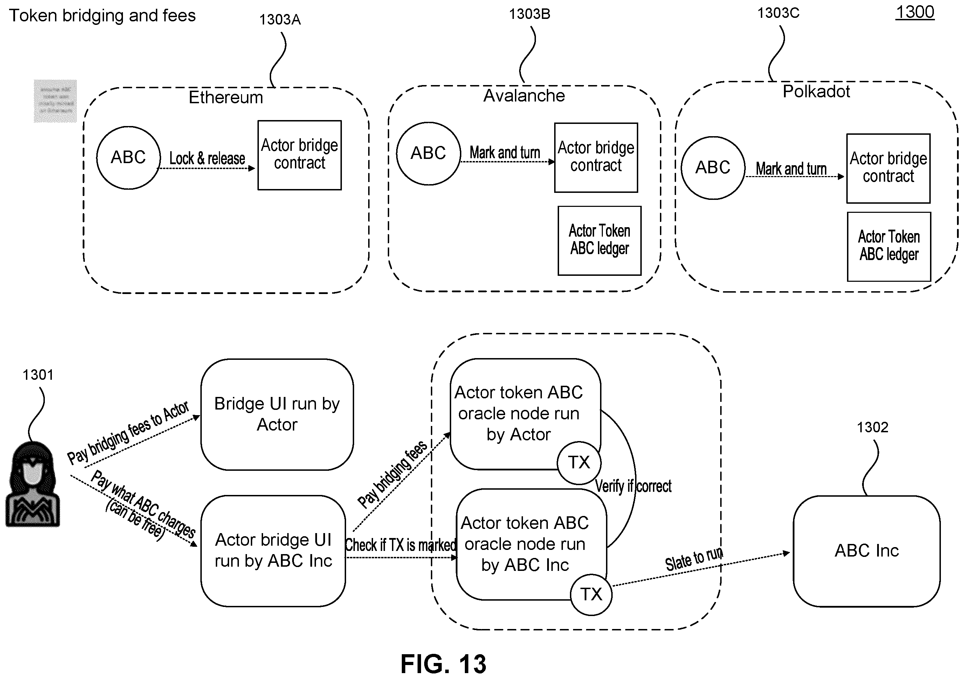

FIG. 13 is a diagram illustrating a bridging architecture 1300. Bridging architecture includes token 1303A, token 1303B, token 1303C, actor 1301, and actor 1302.

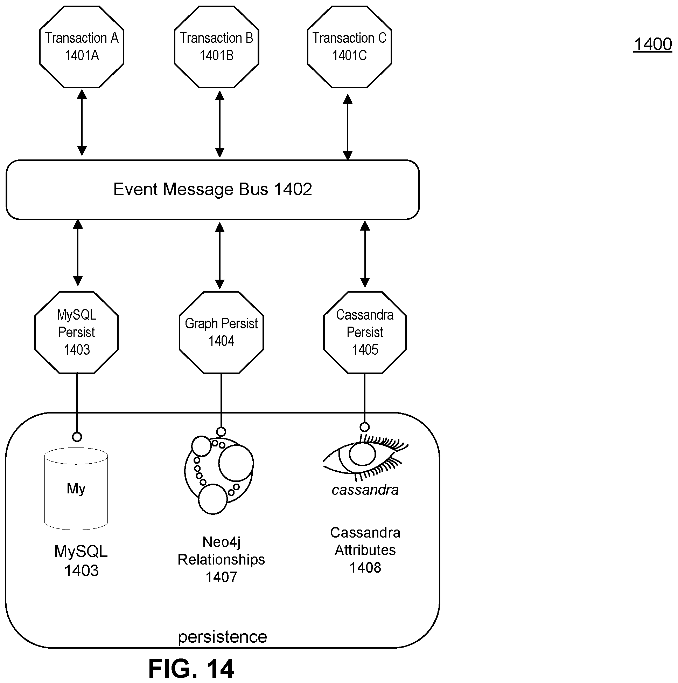

FIG. 14 is a diagram illustrating an architecture 1400 for supporting transactions using an event message bus. Architecture 1400 may include transactions 1401A-1401C, event message bus 1402, MYSQL persist 1403, graph persist 1404, CASSANDRA persist 1405, MySQL 1406, NEO4J relationships 1407, and CASSANDRA attributes 1408.

Moving assets, data, and functionality between blockchains is one of the most sought after capabilities in the wider ecosystem. Bridging is the process of using a cross-chain bridge to move an asset from one type of blockchain to another type of blockchains. These cross-chain bridges have inherent security issues that hackers and bad actors can exploit. Exploits are now measured in the billions of dollars lost.

Bridging presents numerous risks and vulnerabilities. Risks include:
(1) Hack: will someone hack the bridge being used?
(2) Bugs: what if an update inadvertently leaves the gate open?
(3) Operational: what if the bridge shuts down and tokens are locked in the bridge?
(4) Theft: what if the operator steals tokens?
(5) Interoperability: if a bridge is created from A to B to C, it is not possible to simply bridge from C to A. It has to go from C to B to A.

Trying to exchange something of value between two parties that do not share a common trust mechanism creates vulnerabilities. For example, if we have two leaders of neighboring towns: Leader-A and Leader-B. Leader-A may want to trade some fruit from TownA-Orchard to Leader-B in return for some TownB-Bread. Neither can safely trust that the exchange rate for Fruit-to-Bread is known or correct in local terms. This two-leader scenario means that Leader-A and Leader-B must somehow come to trust that:
(1) the other is not going to cheat,
(2) the other is giving a fair exchange rate,
(3) there is no loss or gain for either commodity during the transfer resulting in an unfair exchange, and
(4) that the other will be able to execute their portion of the exchange correctly, safely, and provably.

The notion of escrow was created to handle this situation in the offline world. By bringing in a disinterested third party to secure the terms and mechanism of the transaction, both interested parties have additional safety and trust in the transfer.

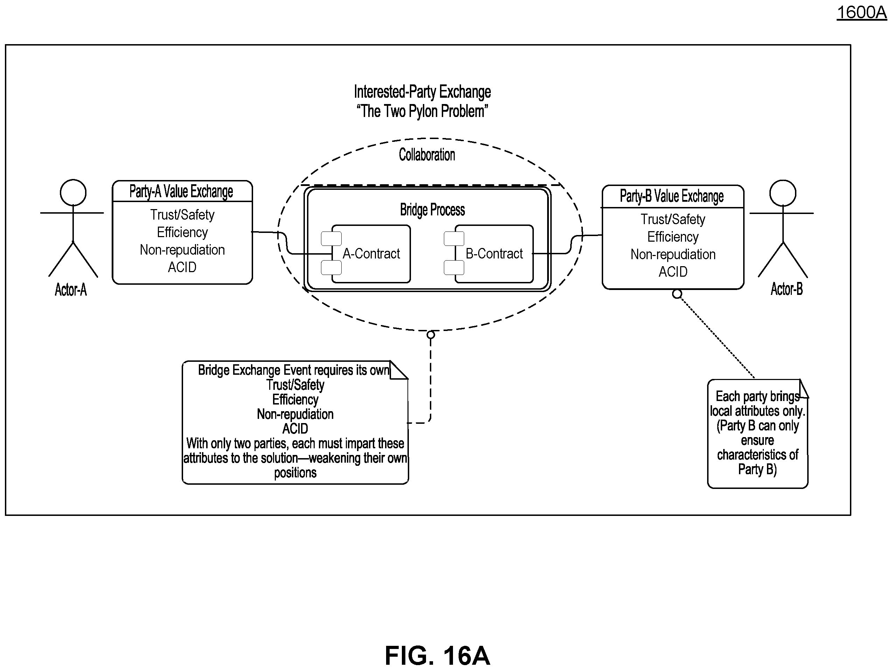

However, legacy blockchain systems do not employ this methodology. Instead, by leveraging a two-participant (or better termed "interested party exchange") model, stress is placed on the very foundational aspects of the exchange. This may be referred to as a "two pylon" bridge and is illustrated in FIG. 16A as methodology 1600A.

Legacy blockchain systems employ this methodology-bridging by creating a contract on one side to lock up tokens-*e.g*., using A-Contract for Actor-A. While tokens are locked, the locking is announced to Actor-B. Actor-B then creates a contract that commits new tokens for the transaction and announces this back to A. The tokens are burnt and the transfer is completed. All of this relies on member functions provided by the distinct chains. These operations are all expensive and exploitable by hackers.

The disclosed platform provides a robust and secure mechanism to assure behaviors between established relationships. Because the platform does not permit malleable governance for any set of transactions and this rigidity is enforced on-chain, the structure allows for a trustable means to assure transactions between entities. As the platform also permits parallel-but-isolated transactions, the solution scales into the thousands and millions of transactions per second without sacrificing atomicity for any particular transaction. For bridging, the disclosed platform leverages the security and assurances of a three-pylon approach.

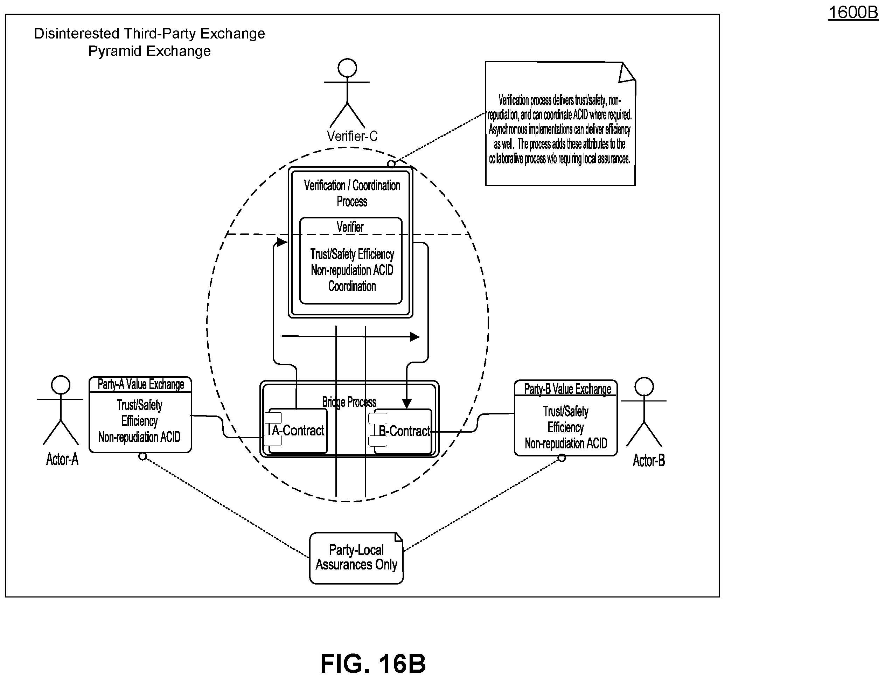

FIG. 16B illustrates methodology 1600B including the basic steps employed to providing a secure bridge using a three-pylon approach in the disclosed platform, effecting technological improvements over the two-pylon approach. In this third-party data interchange mechanism, interested actors use the capabilities of the platform to provide a stakeholder method for secured interchange. The stakeholder does not benefit from the value exchange conducted between Actor-A and Actor-B but instead relies on service fees or other means of compensation.

The disclosed platform may provide the service of "disinterested third party" in a variety of ways, including:
(1) Transaction coordination (below we call it "verifier"),
(2) Escrow services,
(3) Notary services,
(4) Redundant transaction pathing, and
(5) Resilient/Redundant transaction records/audits.

The above-described approach to implementing governance improves on existing bridging approaches. Because the platform may span multiple chains by default, the custodial account can operate in both chains. The approach is hack-proof because a hacker cannot attack all three actors. Verifier-C is inaccessible and private.

This implementation creates a z-network function for a transaction using the above approach. The z-network function may include four steps: (1) initiated; (2) running; (3) money transferred in/out, and (4) sealed blockchain. After the transfer is completed the entire audit chain is readily available.

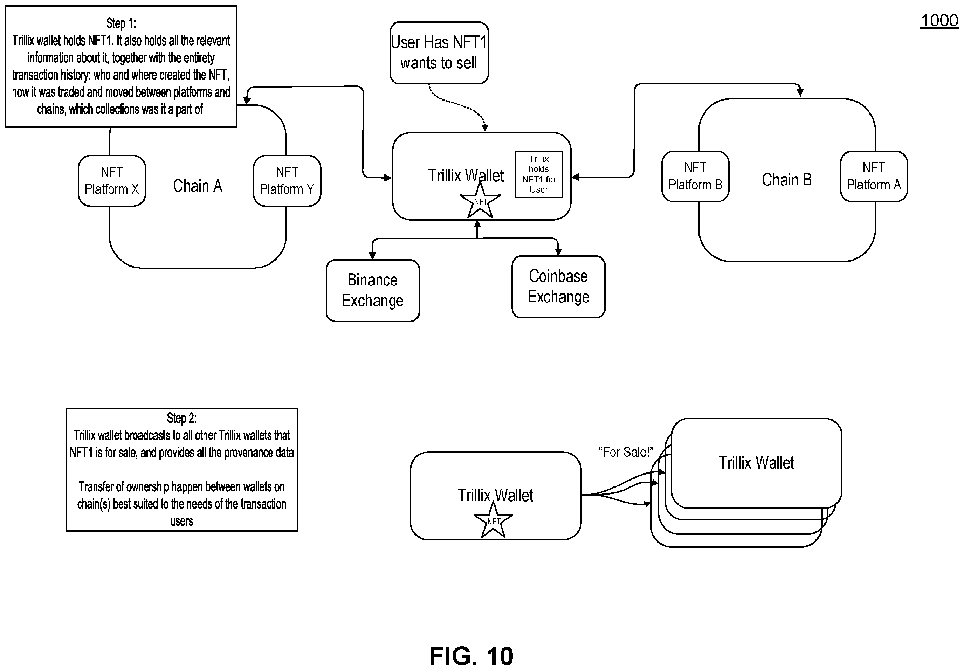

This bridging technique is equally applicable to single value asset such as NFTs. FIG. 10 is diagram 1000illustrating a use case involving an NFT. NFTs are unique and high-value assets. NFTs can be moved between chains. When bridging to transfer an NFT, a ledger may be associated with the previous asset in the old chain. When legacy tools perform the bridging, the asset is destroyed on a first chain and burnt in a second chain. This causes problems.

For one, the set of ownership rights are different between the two chains. Moreover, this kills the provenance of the NFT-the ledger of ownership on the source chain is destroyed along with the NFT. Some tools offer NFT-bridging products but they do not transfer the title information along with the asset and the bridge creates no record of the title provenance. The above-described approach addresses this scenario with the N-dimensional blockchain structure and governance approach.

Depending on the asset type, the behavior of the contracts may differ, but the general structure for these multi-party transactions is the same. As with all on-chain applications, any and all existing mechanisms for validation, verification, non-repudiation, and isolation which may be employed by a source, destination, or intermediary blockchain are available for use in the contracts. These can include signature schemes, lock-and-burn techniques, token-wrapping, custodial management, and any other host of existing and emerging chain-specific technologies.

### Distributed Consensus Algorithm Using a Barrier-Synced Network

In some embodiments, the N-dimensional blockchain structure discussed above may leverage consensus algorithms in various ways (*e.g*., to drive the creation of new blocks). This section describes an improvement to such consensus algorithms using a barrier-synched network. By leveraging a synchronous and known-participant network infrastructure, the behavior, simplicity, and security of consensus algorithms may be streamlined and optimized. The improvement may be implemented in system, apparatus, device, method and/or computer program product embodiments, and/or combinations and sub-combinations thereof.

Consensus is a fundamental problem for networks. While network protocols like TCP/IP are designed to provide resiliency for many common failure and error scenarios, in many cases these protocols do not suffice for in-context messages. Distributed consensus algorithms have arisen that provide a response to the deficiencies in unreliable networks with varying degrees of success. However, these algorithms use software to solve several problems at once.

"Consensus" is a process of agreeing on a result among a group of participants. Reaching consensus is an integral part of distributed computing. For example, KUBERNETES and other orchestration systems rely on distributed databases to consistently represent states across clusters and nodes. These tools rely on distributed key-value stores as a reliable way to store and retrieve data.

For example, many distributed computing systems use ETCD. ETCD is a consistent, distributed key-value store. ETCD is a foundational technology employed in blockchain, KUBERNETES, and Web3 systems, service meshes and fabrics, workload orchestration and automation, application service frameworks, scheduling systems, and other distributed computing usage scenarios.

A distributed key-value data store relies on a consensus algorithm to determine the state of distributed data. Consensus algorithms allow a collection of machines to coherently work together to determine data state. These algorithms are fault-tolerant and scalable. There are many implementation options available that manage consensus in distributed computing systems.

PAXOS is one family of protocols used to solve the problems of building consensus. PAXOS was first implemented in 1989 and provides mechanisms for reaching consensus among and across fallible nodes in a network. PAXOS has been updated and expanded since its release.

RAFT provides another commonly employed consensus algorithm that provides an alternative to the PAXOS family. RAFT was originally described in the paper "*In Search of an Understandable Consensus Algorithm"* by Diego Ongaro and John Outserhout. RAFT underlies popular applications in both cloud computing (*e.g*., KUBERNETES), blockchain systems (*e.g.* HYPERLEDGER), and other distributed computing systems. RAFT is used in ETCD and is known for its easy to understand documentation.

Both PAXOS and RAFT have strong affinity and support. The paper *"Paxos vs. Raft: Have we reached consensus on distributed consensus"* by Heidi Howard and Richard Mortier compares these two consensus algorithms. PAXOS and RAFT are also the most widely known and understood algorithms, but other consensus algorithms exist as well, *e.g*., Byzantine Fault Tolerance from IBM ("ReBFT"). These solutions are employed in both the cluster and hyper-scale domain and the digital ledger/blockchain spaces.

These algorithms rely on similar techniques to build consensus, and the algorithms make basic assumptions about the state of their operating environment. These assumptions center around the notion that communications between participants are unreliable and that the participants themselves may be unreliable in the decision-and-answer process. From the point of view of an algorithm implementer, it is immaterial as to "why" a component might be untrustworthy-this unreliability must be addressed. Additionally, the unreliability must be handled in the first trusted location. The common, overarching assumption is that no trustworthiness exists in network hardware and that unreliability problems must be solved in software.

Specifically, distributed consensus algorithms operate under the following assumptions:
1. All participants must decide within a finite time;
2. All correct decisions must agree with each other;
3. All correct inputs to the algorithm must always derive the same outputs;
4. All correct decisions imply correct proposals and inputs;
5. Message delivery latencies differ between participants;
6. Heterogeneous participants will derive correct decisions at different rates; and
7. Practical communication is a source of both crash and Byzantine faults.

Given these assumptions, consensus algorithms suffer from deficiencies.

Message transmission is unreliable: Distributed consensus algorithms assume that all participant communications must be point-to-point to ensure message delivery. In practical terms, broadcast or multicast communications are not supported even though nothing prohibits these communications. Nevertheless, consensus algorithms do not permit these communication paradigms even when they might function adequately/beneficially within a distributed consensus algorithm.

Message participants are unreliable: Distributed consensus algorithms assume that messengers, agents, and systems that handle operations are unreliable in their ability to create, transmit, deliver, and reply to messages. There can be any number of reasons why this might be the case, including crashes and Byzantine faults. For example, RAFT requires multiple validation responses to accept any changes to data or configuration. This redundancy prevents partitioning and ensures that a minimally acceptable agreement is reached. Distributed consensus algorithms assume that at any time messages may be lost, duplicated, garbled, or any number of other alterations may occur that result in malign behavior. In actual implementation, this requires multiple confirmations regardless of the delivery guarantee mechanisms in place in an environment. If a message is guaranteed to reach a participant, the leader will still wait for acknowledgement and confirmation from multiple participants before progressing. Additionally, the notion of unreliable messaging participants assumes that the participants do not possess information about the environment and other participants which is reliable and trustworthy. As a result, the tools cannot properly use such knowledge.

Message verification is unreliable: Consensus algorithms consider the process by which a message is accepted, validated, and verified to be unreliable. Accordingly, the algorithms attempt to mitigate problems within the host by handling a message and constructing replies to those messages. For example, RAFT requires direct (unicast) replies from the host which are then compared in the leader with other replies to generate agreement. Leader failures and missed replies result in additional network traffic for verification, and comparison traffic increases the load and latencies on the leader host. This delays data progress through the consensus-building engine.

For the most common networks used for communication between participants (Ethernet, WI-FI, INFINIBAND), the above assumptions are true. There is no guaranteed delivery for packets in any of these protocols. There is no strict ordering for message delivery. There is no means in the network topology to confirm delivery of a message. Solving all of these situations relies on higher-level protocols. As Ethernet, INFINIBAND, and WI-FI are ubiquitous in the distributed computing world, the characteristics of these networks provides the basis for existing consensus algorithms.

To overcome these technological limitations, the disclosed technological innovations use a barrier synchronized network as the transport layer supporting the consensus algorithm. A barrier-synched network creates synchronous messaging between known participants. Global barrier synchronization ensures that all in-flight messages are delivered in synchronicity with strict order and are positively acknowledged by the network. A barrier-synched network is aware of the state of all participants at all times and of the state of all messages in-flight, in sending, and in delivery.

Unlike Ethernet and INFINIBAND networks, a barrier-synced network may use hardware to enforce and guarantee delivery, packet order, message send, receipt, and replies without relying on consensus software, elections, or leadership in the cluster to provide such capabilities. While barrier synchronization may cause increased latencies versus a completely asynchronous method, the speed and performance of small packet transfers for the barrier-synched network may easily surpass 1 billion packets per second-above even the asynchronous methods in Ethernet or INFINIBAND.

One example barrier-synched network may be deployed using a field-programmable gate array (FPGA) based platform or other integrated circuitry that functions as a switch, firewall, router, or other network device. Solely for illustrative purposes, an example implementation is described below that uses switching hardware provided by DATA VORTEX to operate a barrier-synced network. Unlike WI-FI, INFINIBAND, or Ethernet, such a network may be absolutely egalitarian, each packet may take exactly the same amount of time to reach its destination without crossing any latency boundaries. Such a barrier-synced network may operate in synchronous mode offering guaranteed delivery with all recipients receiving packets at the exact same time.

A barrier-synced network may solve the difficulties described above in consensus algorithms by allowing a consensus algorithm to address a much smaller problem space. This may dramatically improve throughput, efficiency, and trust of the distributed consensus system as a whole. Message verification may be performed in network hardware and therefore not require additional steps from the consensus algorithm to ensure validity and completeness of proposals and responses. Such a network may provide:
1. Predictable latency;
2. Known network participation;
3. Guaranteed message delivery;
4. Ordered message delivery;
5. Message validity and verification performed in the network hardware; and
6. Network partition impossibility.

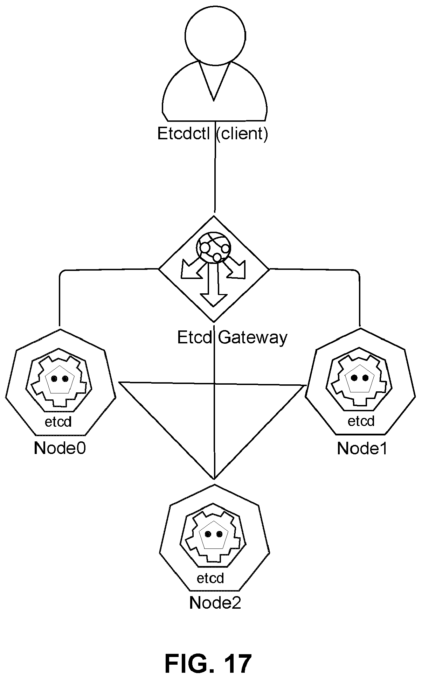

FIGS. 17, 18A, 18B, 19, and 20 illustrate an implementation of this technique applied to the RAFT consensus algorithm. However, as discussed above, RAFT merely provides an illustrative test case and the technique is equally applicable across any suitable consensus algorithm.

This approach offers substantial benefits in efficiency and scalability. A network may support a synchronized broadcast topology that may decrease the total number of consensus messages directly in proportion to the number of participants. In a 5-participant (p=5) consensus network, a RAFT implementation would require at least 6 * p unicast messages per participant to start communications for a minimum of 30 messages plus the initial suggestion and final acknowledgement from the leader (32 messages total) before RAFT data operations may commence. Using a synchronous-delivery broadcast mechanism with no additional changes to the protocol, the number of messages would drop to only 6+2 (3 submit/respond plus the start and finish as before). This represents a 400% improvement in efficiency on a p=5 network with no modifications whatever to the protocol specification.

FIG. 17 is an illustration of a general ETCD implementation having a client, an ETCD gateway, and three nodes. Such an ETCD implementation provides a consistent, distributed key-value store offering a reliable way to store data used in a distributed system or cluster of machines.

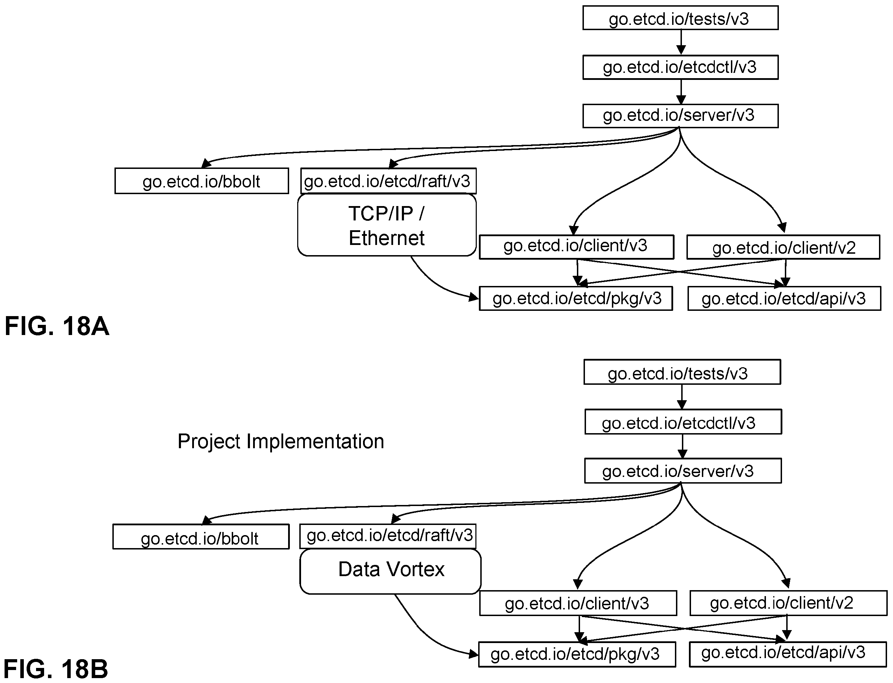

FIGS. 18A and 18B illustrate an implemented change made to ETCD and specifically to the ETCD's use of the RAFT consensus algorithm. In FIG. 18A, the TCP/IP/Ethernet module is relied upon by the go.etcd.io/etcd/raft/v3 library for network transport. In FIG. 18B, the network transport is changed to the transport layer provided by DATA VORTEX. This is the transport layer for a barrier-synced network, which offers the various benefits of a synchronous network described above. A similar change may be made to any consensus algorithm employed in the context of any distributed computing system.

The general implementation in this example:
1. Uses the modular implementation of the RAFT protocol as leveraged beneath ETCD (commonly considered the reference implementation for RAFT) and replaces the network transport with the transport used by the synchronous network.
2. Uses the resulting configuration to handle all consensus protocol communications, demonstrating the feasibility of the design for future workloads.
3. Demonstrates the ability to leverage both separate and common network communications for data movement into the platform using RAFT. This covers two types of communications for a systems leveraging RAFT for consensus: (1) protocol communications and (2) data communications
4. Ensures that protocol communications are managed using the DATA VORTEX network.

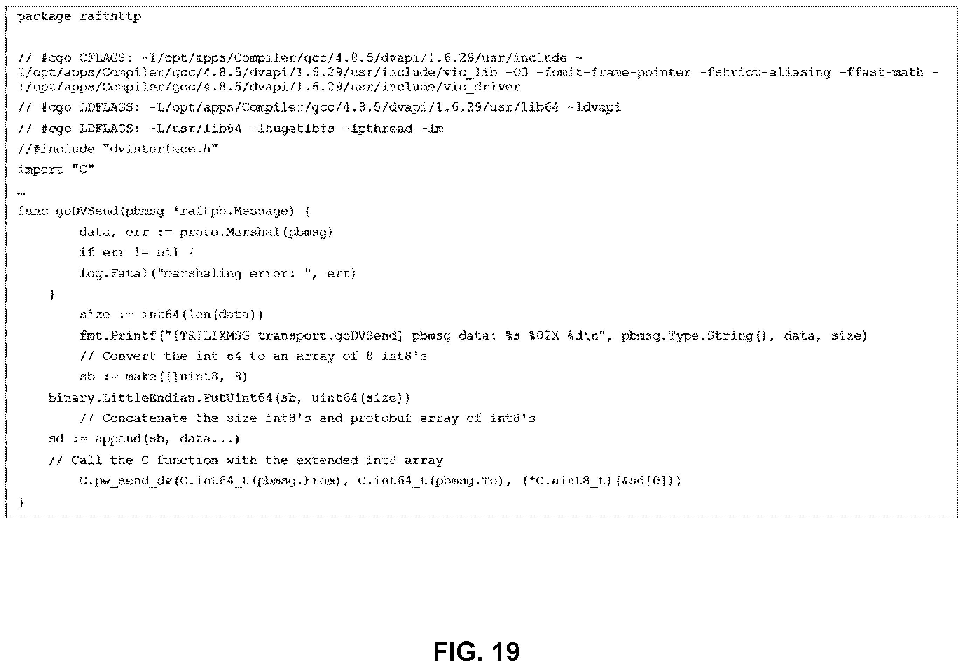

FIG. 19 illustrates code modifications made to RAFT to allow the protocol to harness the barrier-synced network's capabilities. The RAFT implementation is written in Golang, while the API provided by DATA VORTEX is in C. The changes here implement methods in the existing RAFT modules to replace the communications interfaces with the DATA VORTEX mechanisms for data movement. The demonstration version duplicates the existing transport interfaces to demonstrate and compare the messages and message rates with the original version. Since the communications path inside RAFT is hidden from the end user, additional logging and debugging controls were added to ensure that the tests show the messages and transport vehicles employed during the demonstration. FIG. 19 illustrates a snippet of the interface code as implemented in Golang and the corresponding C driver methods which govern network communications.

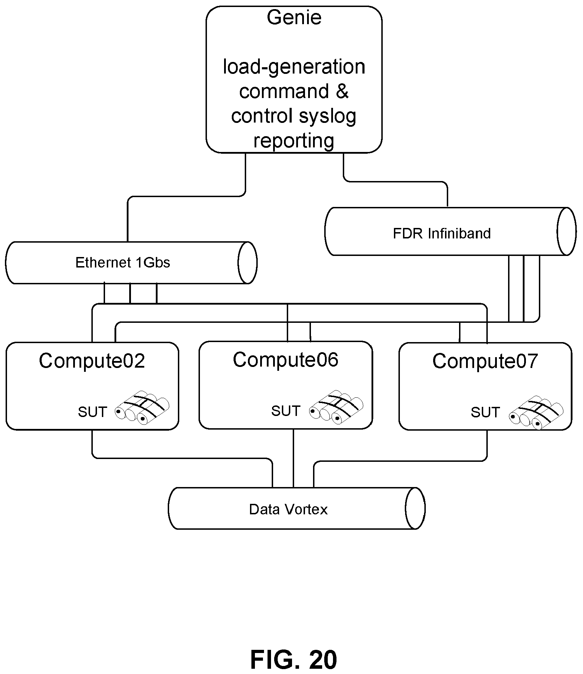

FIG. 20 illustrates a test harness that was developed to test and assure this implementation. The test harness performs the following steps:
1. Reset the network and initialize a physical-to-logical address mapping (Table 2) which is registered to each VIC and to the switch.
2. Clean directories in memory filesystem to hold the WAL persistence engine for each RAFT participant.
3. Clear the logging directories in memory filesystem to hold syslog messages from the run.
4. In parallel: start the raftexample nodes as a 3-node cluster
5. Once the cluster is started and synchronized, the loader node (genie) begins sending data into the cluster to demonstrate RAFT agreement amongst the cluster.

The test harness includes:
1. A single application driver and configuration driver node (*genie).*
2. 3 consensus participant nodes connected via the DATA VORTEX network, an Ethernet network, and an INFINIBAND network (*compute02, compute06, compute07*).

See the physical to logical addressing table as specified in Table 2.
3. All nodes utilized .
Golang 1.18 for Linux;
DATA VORTEX core api and libraries version 1.6.29 compiled with gcc 4.8.5;
CentOS 7.9.2009 using Linux kernel 3.10.0-1160.59.1.el7.x86_64;
128G DDR4 Memory;
Intel E5-1630v4 3.7Ghz 8-core CPU;
WAL configured for in-memory persistence only; and
Disk persistence was not used for testing.

Similar modifications may be made to any consensus algorithm to achieve the benefits of using a barrier-synced network. Moreover, the implemented consensus algorithm may be burnt to hardware having the consensus building logic running on an application-specification integrated circuit ("ASIC"). Thus, the invention may be implemented as a hardware instead of in the software and integrated into switches and other network components or installed within user devices.

Bringing the capabilities of a barrier-synched network to the problem of distributed consensus may provide security and safety improvements and improve the performance and scaling of consensus algorithms drastically. Additional work may employ similar techniques to the benefits to full-fledged application suites which leverage consensus in production. These include a wide variety of applications and orchestration tasks including KUBERNETES and container orchestration, blockchain and Web3 systems, service meshes and fabrics, workload orchestration and automation, application service frameworks, and scheduling systems.

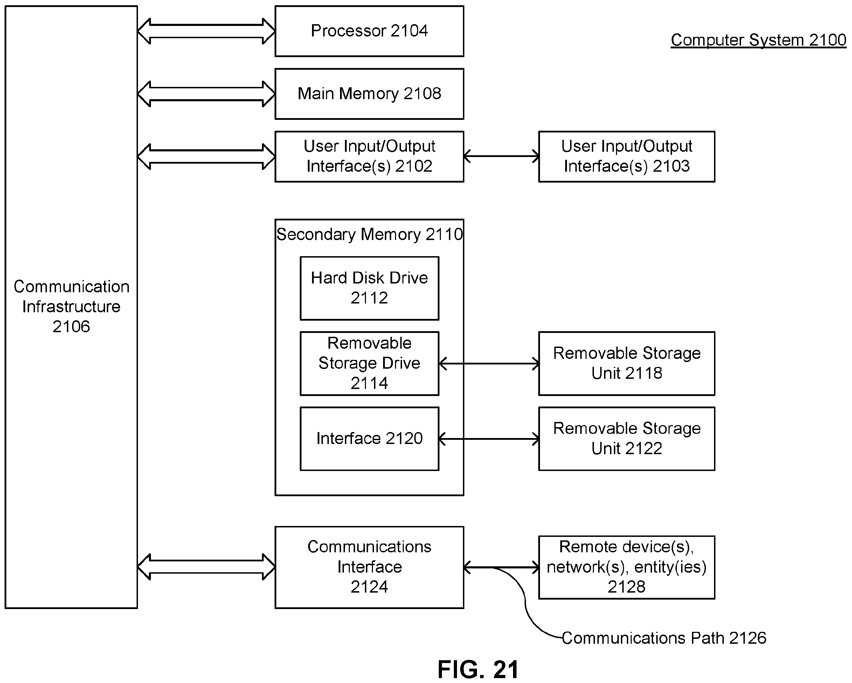

FIG. 21 illustrates an example computer system that may be used to implement various embodiments of the disclosure. Various embodiments can be implemented, for example, using one or more computer systems, such as computer system 2100 shown in FIG. 21. Various embodiments may be implemented using a plurality of networked computer systems, such as the Internet. Such a network may include a plurality of computer systems, servers, mobile devices, etc. that are geographically distributed. Computer system 2100 may be any well-known computer capable of performing the functions described herein, such as computers available from International Business Machines, Apple, Sun, HP, Dell, Sony, Toshiba, etc. Computer system 2100 may be a server or a mobile device.

Computer system 2100 includes one or more processors (also called central processing units, or CPUs), such as a processor 2104. Processor 2104 is connected to a communication infrastructure or bus 2106.

Computer system 2100 may include user input/output device(s) 2103, such as monitors, keyboards, pointing devices, touch screens, etc., which communicate with communication infrastructure or bus 2106 through user input/output interface(s) 2102.

Computer system 2100 may include a main or primary memory 2108, such as random access memory (RAM). Main memory 2108 may include one or more levels of cache. Main memory 2108 has stored therein control logic (*i.e.,* computer software) and/or data.

Computer system 2100 may also include one or more secondary storage devices or memory 2110. Secondary memory 2110 may include, for example, a hard disk drive 2112 and/or a removable storage device or drive 2114. Removable storage drive 2114 may be a floppy disk drive, a magnetic tape drive, a compact disk drive, an optical storage device, tape backup device, and/or any other storage device/drive.

Removable storage drive 2114 may interact with a removable storage unit 2118. Removable storage unit 2118 may include a computer usable or readable storage device having stored thereon computer software (control logic) and/or data. Removable storage unit 2118 may be a floppy disk, magnetic tape, compact disk, DVD, optical storage disk, and/ any other computer data storage device. Removable storage drive 2114 reads from and/or writes to removable storage unit 2118 in a well-known manner.

According to an exemplary embodiment, secondary memory 2110 may include other means, instrumentalities or other approaches for allowing computer programs and/or other instructions and/or data to be accessed by computer system 2100. Such means, instrumentalities or other approaches may include, for example, a removable storage unit 2122 and an interface 2120. Examples of the removable storage unit 2122 and the interface 2120 may include a program cartridge and cartridge interface (such as that found in video game devices), a removable memory chip (such as an EPROM or PROM) and associated socket, a memory stick and USB port, a memory card and associated memory card slot, and/or any other removable storage unit and associated interface.

Computer system 2100 may further include a communication or network interface 2124. Communication interface 2124 enables computer system 2100 to communicate and interact with any combination of remote devices, remote networks, remote entities, etc. (individually and collectively referenced by reference number 2128). For example, communication interface 2124 may allow computer system 2100 to communicate with remote devices 2128 over communications path 2126, which may be wired and/or wireless, and which may include any combination of LANs, WANs, the Internet, etc. Control logic and/or data may be transmitted to and from computer system 2100 via communication path 2126.

In an embodiment, a tangible apparatus or article of manufacture comprising a tangible computer useable or readable medium having control logic (software) stored thereon is also referred to herein as a computer program product or program storage device. This includes, but is not limited to, computer system 2100, main memory 2108, secondary memory 2110, and removable storage units 2118 and 2122, as well as tangible articles of manufacture embodying any combination of the foregoing. Such control logic, when executed by one or more data processing devices (such as computer system 2100), causes such data processing devices to operate as described herein. The methods and flow diagrams disclosed here, including those shown in the Figures, may be implemented as control logic or instructions stored on a non-transitory computer readable medium, which, when executed, cause one or more processors to perform the control logic or instructions.

It is to be appreciated that the Detailed Description section is intended to be used to interpret the claim(s).

The disclosed embodiments have been described above with the aid of functional building blocks illustrating the implementation of specified functions and relationships thereof. The boundaries of these functional building blocks have been arbitrarily defined herein for the convenience of the description. Alternate boundaries can be defined so long as the specified functions and relationships thereof are appropriately performed.

The foregoing description of the specific embodiments will so fully reveal the general nature of the invention that others can, by applying knowledge within the skill of the art, readily modify and/or adapt for various applications such specific embodiments, without undue experimentation, without departing from the general concept of the disclosed embodiments. Therefore, such adaptations and modifications are intended to be within the meaning and range of equivalents of the disclosed embodiments, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance.

While the present disclosure is described herein with illustrative embodiments for particular applications, it should be understood that the disclosure is not limited thereto. A person skilled in the art with access to the teachings provided herein will recognize additional modifications, applications, and embodiments within the scope thereof and additional fields in which the disclosure would be of significant utility.

## Claims

1. A system comprising:
a memory storing a plurality of interlinked blockchains comprising a core blockchain and a first blockchain; and
at least one processor coupled to the memory configured to:
create, in the first blockchain, a first entity, a second entity, a behavior comprising a task, and a relationship comprising the behavior, the first entity, and the second entity; and
create a second blockchain linked to the first blockchain that records transactions for the relationship, wherein the first blockchain comprises an enforcement mechanism to complete the task.

2. The system of claim 1, the at least one processor further configured to:
record a transaction between the first entity and the second entity in the second blockchain by adding a record block to the second blockchain, the record block comprising a result of the task.

3. The system of claim 1, wherein the first entity, the second entity, the behavior, the relationship, and the enforcement mechanism represent governance information that is static and immutable.

4. The system of claim 1, wherein:
the enforcement mechanism references a location in the plurality of interlinked blockchains; and/or
the enforcement mechanism provides immutability and transparency in method and operation, and wherein the enforcement mechanism comprises a smart contract, an append-only structure, a blockchain transaction, a journaling protocol, a cryptographic assurance, a non-volatile protocol, or a circuit-controlled protocol.

5. The system of claim 1, wherein:
the second blockchain inherits the enforcement mechanism from the first blockchain; and/or
the second blockchain further comprises a genesis block, a header block comprising a link to the first blockchain, a block that stores the enforcement mechanism, and one or more record blocks, wherein the block that stores the enforcement mechanism precedes the one or more record blocks.

6. The system of claim 1, the at least one processor further configured to:
create a mirrored blockchain to record the transactions between the first entity and the second entity,
optionally wherein the at least one processor is further configured to:
record a transaction between the first entity and the second entity in both the second blockchain and the mirrored blockchain by adding a first record block to the second blockchain and a second record block to the mirrored blockchain, wherein the first record block and the second record block comprise a result of the task, and wherein the first record block and second record block are congruent.

7. The system of claim 1, wherein the core blockchain comprises one or more linking blocks and logic that specifies a condition to create an additional blockchain.

8. The system of claim 1, the at least one processor further configured to:
record a network of nodes in a graph database, wherein a first node in the network of nodes represents the first entity, a second node in the network of nodes represents the second entity, a third node in the network of nodes represents a location in the plurality of blockchains, and a fourth node in the network of nodes represents the behavior,
optionally wherein the at least one processor is further configured to:
generate a graph query to retrieve one or more relationships involving the first entity in the plurality of interlinked blockchains; and
run the graph query against the graph database to retrieve a query result; and/or optionally wherein the at least one processor is further configured to:
generate a graph query to retrieve one or more transaction locations in the plurality of interlinked blockchains where the first entity participated in a transaction; and
run the graph query against the graph database to retrieve a query result.

9. The system of claim 1, wherein the first entity is a human actor, an account, an object, a token, a group, a process, a computer, an artificial intelligence construct, an avatar representing an actor or action, or an expression or function comprising actions.

10. The system of claim 1, the at least one processor further configured to
create, in the first blockchain, a third entity, a second behavior comprising a second task, and a second relationship between the third entity and a relationship entity corresponding to the relationship; and
create a third blockchain linked to the first blockchain that records transactions for the second relationship.

11. A method, comprising:
creating, by one or more processors, in a first blockchain linked to a core blockchain, a first entity, a second entity, a behavior comprising a task, and a relationship comprising the behavior, the first entity and the second entity; and
creating a second blockchain linked to the first blockchain that records transactions for the relationship, wherein the first blockchain comprises an enforcement mechanism to complete the task.

12. The method of claim 11, further comprising:
recording a transaction between the first entity and the second entity in the second blockchain by adding a record block to the second blockchain, the record block comprising a result of the task.

13. The method of claim 11, further comprising:
creating a mirrored blockchain to record the transactions between the first entity and the second entity; and
recording a transaction between the first entity and the second entity in both the second blockchain and the mirrored blockchain by adding a first record block to the second blockchain and a second record block to the mirrored blockchain, wherein the first record block and the second record block comprise an input to the task and where the first record block and the second record block are congruent.

14. The method of claim 11, further comprising:
recording a network of nodes in a graph database, wherein a first node in the network of nodes represents the first entity, a second node in the network of nodes represents the second entity, a third node in the network of nodes represents a location in a plurality of interlinked blockchains, and a fourth node in the network of nodes represents the behavior; and
running a graph query against the graph database to retrieve a query result.

15. A non-transitory computer-readable device having instructions stored thereon that, when executed by at least one computing device, causes the at least one computing device to perform operations comprising:
creating, in a first blockchain linked to a core blockchain, a first entity, a second entity, a behavior comprising a task, and a relationship comprising the behavior, the first entity, and the second entity; and
creating a second blockchain linked to the first blockchain that records transactions for the relationship, wherein the first blockchain comprises an enforcement mechanism to complete the task.
